# EUROPÄISCHE PATENTSCHRIFT

(11) **EP 0 829 822 B1**
(45) Veröffentlichungstag und Bekanntmachung des Hinweises auf die Patenterteilung: **11.06.2003**
(21) Anmeldenummer: 97114317.7
(22) Anmeldetag: 19.08.1997
(51) Int. Cl.: G06T 15/00

(54) **Verfahren zur Anzeige von geometrischen Objektoberflächen**
Method for displaying geometric surfaces
Méthode d'affichage de surfaces géométriques

(30) Priorität: 13.09.1996 DE 19637463
(43) Veröffentlichungstag der Anmeldung: 18.03.1998
(73) Patentinhaber: GSF-Forschungszentrum für Umwelt und Gesundheit GmbH, 85764 Oberschleissheim (DE)
(72) Erfinder: Haubner, Michael, 85764 Oberschleissheim (DE); Englmeier , Karl-Hans, 85764 Oberschleissheim (DE)
(74) Vertreter: Reinhard - Skuhra - Weise & Partner

(56) Entgegenhaltungen:
- FALBY J S ET AL: "NPSNET: HIERARCHICAL DATA STRUCTURES FOR REAL-TIME THREE- DIMENSIONAL VISUAL SIMULATION" COMPUTERS AND GRAPHICS, Bd. 17, Nr. 1, 1.Januar 1993, Seiten 65-69, XP000546522
- GROSS M H ET AL: "FAST MULTIRESOLUTION SURFACE MESHING" PROCEEDINGS OF THE VISUALIZATION CONFERENCE, ATLANTA, OCT. 29 - NOV. 3, 1995, 29.Oktober 1995, INSTITUTE OF ELECTRICAL AND ELECTRONICS ENGINEERS, Seiten 135-142, XP000585401
- HE T ET AL: "VOXEL BASED OBJECT SIMPLIFICATION" PROCEEDINGS OF THE VISUALIZATION CONFERENCE, ATLANTA, OCT. 29 - NOV. 3, 1995, 29.Oktober 1995, INSTITUTE OF ELECTRICAL AND ELECTRONICS ENGINEERS, Seiten 296-303, XP000585421

## Beschreibung

Die Erfindung betrifft ein Verfahren zur Anzeige von geometrischen Objektoberflächen auf einem Ausgabegerät mit variabler Genauigkeit.

Verfahren mit dreidimensionalen Graphiken kommen in einem breiten Spektrum von Anwendungsgebieten wie beispielsweise CAD, Visualisierung von medizinischen oder industriellen 3D-Scanner-Daten, Flug- und Fahrsimulationen oder der Darstellung komplexer wirtschaftlicher Zusammenhänge vor. Eines der wichtigsten Basiselemente zur Darstellung dreidimensionaler Objekte ist das Polygon bzw. N-Eck. Das einfachste Polygon ist das Dreieck. Objektoberflächen lassen sich nahezu beliebig genau durch feine Gitternetze beispielsweise aus Dreiecken beschreiben. Bei derartigen geometrischen Objektoberflächen ist die Darstellungsgeschwindigkeit von besonderer Bedeutung. Man unterscheidet dabei drei Kategorien, nämlich nicht-interaktive Darstellungsverfahren, interaktive Darstellungsverfahren und immersive Darstellungsverfahren. Bei den nicht-interaktiven Darstellungsverfahren muß die Berechnung der Computergraphik bzw. der geometrischen Darstellung nicht innerhalb einer vorgegebenen Zeitspanne erfolgen, beispielsweise bei Filmproduktionen kann die Berechnungszeit mehrere Wochen oder Monate sein. Bei den interaktiven Darstellungsverfahren muß ein interaktives Arbeiten mit den dreidimensionalen Objekten ermöglicht werden. Dazu sind etwa drei Bilder pro Sekunde zu berechnen und darzustellen, da sonst der Zusammenhang zwischen der Benutzereingabe, beispielsweise dem Bewegen einer Maus, und der Reaktion, beispielsweise dem Drehen des Objekts, verlorengeht. Ein Beispiel für interaktive Darstellungsverfahren sind die üblichen CAD-Anwendungen. Die dritte Kategorie der Darstellungsverfahren sind die immersiven Darstellungsverfahren. Bei diesen Verfahren muß die dreidimensionale Darstellung so schnell erfolgen, daß der Betrachter den Eindruck einer fließenden Bewegung erhält. Dies wird etwa ab 15 Bildern pro Sekunde erreicht. Immersive Darstellungsverfahren sind u.a. bei Anwendungen der virtuellen Realität, beispielsweise bei Fahr- und Flugsimulationen anzuwenden.

Die interaktiven Darstellungsverfahren sowie die immersiven Darstellungsverfahren sind sogenannte Echtzeit-Darstellungsverfahren. Soll beispielsweise mit einer Rechnervorrichtung einer mittleren Leistungsklasse eine immersive Darstellung erfolgen, so dürfen die darin enthaltenen Objekte zusammen nicht mehr als eine bestimmte Anzahl von Gitterdreiecken enthalten. Die Leistungsfähigkeit des Rechners limitiert daher die Darstellungsgenauigkeit des Objekts. Bei den bekannten Level of Detail (LOD) Verfahren werden vor Beginn der Darstellung des Objekts mehrere geometrische Beschreibungen vorbereitet, die sich in der Genauigkeit und somit auch in der Komplexität unterscheiden. Bei dreidimensionalen Darstellungen wird dann in Abhängigkeit von bestimmten Kriterien eine bestimmte geometrische Darstellungsrepräsentation ausgewählt. Beispielsweise werden kleine, weit von dem Betrachter entfernt liegende Objekte nur sehr ungenau dargestellt, wodurch Berechnungskapazität für die genaue Darstellung wichtiger Objekte bzw. Teilobjekte zur Verfügung steht.

Zur Darstellung dreidimensionaler Objekte mit Hilfe eines Rechners werden die Objekte in Form von geometrischen Oberflächenbeschreibungen abgespeichert. Die Objektoberfläche wird dabei durch ein Netz von Flächenstücken bzw. Polygonen angenähert. Die geometrischen Oberflächengitternetze werden entweder durch interaktive Konstruktionsverfahren oder durch automatische Konstruktionsverfahren erzeugt.
Bei den interaktiven Konstruktionsverfahren wird das Objekt direkt von dem Anwender in einer geometrischen Form definiert. Der Anwender konstruiert direkt das geometrische Gitter. Daher ist die Komplexität der resultierenden Objekte bei diesen interaktiven Konstruktionsverfahren in der Regel relativ gering, da diese Form der Konstruktion sehr zeitaufwendig ist. Automatische Konstruktionsverfahren setzen eine gegebene Objektbeschreibung voraus. Dabei kann es sich beispielsweise um segmentierte dreidimensionale Scanner-Daten handeln. Zur Darstellung dieser Daten werden die Objektoberflächen automatisch extrahiert und durch Gitternetze beschrieben. Die meisten Verfahren zur Durchführung dieser Verarbeitungsschritte versuchen dabei eine möglichst genaue Approximation zu erzeugen. Deshalb entstehen bei den automatischen Konstruktionsverfahren in der Regel sehr große Mengen an Gitterdreiecken. Bekannte Verfahren zur Konstruktion von geometrischen Objektbeschreibungen aus tomographischen Aufnahmen ist beispielsweise in ACM-Computergraphics, 21 (4): 163 bis 169, 1987, Wiliam E. Lorensen und H.E. Cline "Marching Cubes: A high resolution 3D-surface construction algorithm" beschrieben. Dieses Verfahren wird in vielen medizinischen und industriellen Programmsystemen eingesetzt.

Trotz der hohen Leistungsfähigkeit moderner Graphik-Hardware ist es nicht immer möglich, dreidimensionale Darstellungen komplexer Objekte in Echtzeit zu erzeugen. Dies trifft bei interaktiven und insbesondere bei immersiven Darstellungsverfahren zu. Daher muß bei diesen Darstellungsverfahren die Oberflächenbeschreibung vereinfacht werden, indem man das Objekt durch eine kleinere Menge geometrischer Primitive bzw. Polygone begrenzt. Die dabei eingesetzten Reduktionsverfahren lassen sich in zwei Gruppen einteilen. Die sogenannten Globalverfahren erzeugen komplett neue Oberflächenbeschreibungen, wohingegen die lokalen Verfahren iterativ lokale Bereiche der Oberfläche vereinfachen, indem sie beispielsweise Flächen verschmelzen lassen. Bekannte Reduktionsverfahren sind beispielsweise in Carl Erikson "Polygonal symplification: An overview Technical report, Department of Computer Science, UNC-chappel hill, 1996" beschrieben.

Die bekannten Reduktionsverfahren führen auf der einen Seite zu einer Vereinfachung einer geometrischen Oberfläche, jedoch in fast allen Fällen auch zu einem Verlust und zu einer Verfälschung von Information. Die originale Darstellung, bei der die Objektoberfläche durch viele kleine Polygone dargestellt ist, wird durch die Reduktionsverfahren in eine Darstellung übergeführt, bei der die Objektoberfläche durch wenige größere Polygone beschrieben wird. Die überführte geometrische Darstellung ist nicht exakt deckungsgleich mit der originalen Beschreibung. In vielen Anwendungsgebieten, beispielsweise in der Medizin oder in industriellen Qualtätskontrollen, sind jedoch derartige Verfälschungen, welche durch das Reduktionsverfahren hervorgerufen werden, nicht akzeptabel. Daher werden üblicherweise von einem Objekt mehrere geometrische Beschreibungen erzeugt, die eine unterschiedliche Genauigkeit aufweisen. Die dreidimensionale Darstellung des Objekts wird dann durch sogenannte Levelof-Detail Verfahren (LOD) gesteuert, wie sie beispielsweise in J. Clark "Hierarchical geometric models for the visible surface agorithm" in communications of the ACM 19 (10): 547 bis 554, Oktober 1976" beschrieben sind. Dabei wird während des Darstellungsprozesses in Abhängigkeit von der Relevanz des jeweiligen Objekts eine Genauigkeitsstufe ausgewählt. Die Relevanz bestimmt sich beispielsweise aus der Entfernung zwischen dem Betrachter und dem Objekt, aus der Fokusierung des Betrachters oder aus spezifischen Objekteigenschaften, wie krankhaften Veränderungen von Körpergewebe. Da sich diese Werte im Zeitverlauf verändern können, muß für jedes darzustellende Bild und darin für jedes Objekt eine Auswertung dieser sogenannten LOD-Kriterien erfolgen. Um plötzliche Übergänge zwischen zwei Darstellungsrepräsentationen zu verhindern, können diese transparent überblendet werden, wie beispielsweise in John Rohlf und James Helman "Iris Performer: A high performance multiprocessing toolkit for real-time 3-d graphics" in ACM-Computer graphics proceedings, annual conference series, 1994 beschrieben.

Bei den in Hugues Hoppe beschriebenen Verfahren "progressive meshes" in ACM Computer graphics proceedings, annual conference series, 1996, wird ein geometrisches Objekt durch eine stark vereinfachte Grundform zusammen mit einer linearen Liste dargestellt. Die Elemente der Liste enthalten jeweils lokale Verfeinerungen, d.h. beispielsweise werden zwei benachbarte Dreiecke durch vier kleinere Dreiecke ersetzt. Durch gezielte Ausführung von Verfeinerungsschritten bei der Visualisierung bzw. Darstellung ist damit bei diesem Verfahren ein praktisch beliebiger Genauigkeitsgrad erreichbar.

Eine Kombination von Reduktionsverfahren, bei denen vor der Visualisierung mehrere unterschiedliche genaue Objektbeschreibungen berechnet werden, mit LOD-Verfahren zur Auswahl einer Darstellung pro Objekt hat deutliche Nachteile. Aufgrund der hohen Ortsauflösung moderner 3D-Scanner und den wachsenden Realitäts- bzw. Genauigkeitsanforderungen von computergestützten Simulations-, Konstruktions- und Visualisierungsverfahren erhöht sich die Komplexität der darzustellenden Objekte ständig. Die bisher bekannten Verfahren sind dabei auf eine vorberechnete Beschreibung mit einer konstanten Genauigkeit pro Objekt beschränkt. Mit Ausnahme des oben genannten Progressive-meshes-Verfahrens ist es bei keinem der bisher genannten Verfahren möglich, entlang der Objektoberfläche die Darstellungsgenauigkeit zu variieren. Die Invarianz der Darstellungsgenauigkeit entlang der Objektoberfläche wirkt sich wie folgt nachteilig aus:
Durch eine Auswertung der LOD-Kriterien wird bei den bekannten Verfahren die darzustellende Objektbeschreibung ermittelt. Je größer die Objekte werden, umso schlechter gelingt es, die Objektrelevanz durch einen einzelnen Wert anzunähern. Da die meisten dynamischen LOD-Kriterien, wie beispielsweise der Abstand zwischen dem Betrachter und dem Objekt, sich ständig entlang der Objektoberfläche verändern und bei den bekannten Verfahren nur ein Genauigkeitsgrad ausgewählt werden kann, hat dies zur Folge, daß die meisten Objektbereiche nicht mit derjenigen Genauigkeit dargestellt werden, die sich bei einer Auswertung der LOD-Kriterien für diesen Bereich ergibt. Durch die zu genaue Darstellung weniger relevanter Teilobjekte wird Berechnungskapazität verschwendet und eine ungenaue Darstellung der wichtigen Objektteile führt zu einer Darstellung, die möglicherweise inkorrekte Informationen übermittelt.

Obwohl unsichtbare Objektrückseiten für die Erzeugung einer dreidimensionalen Darstellung von nicht transparenten Objekten irrelevant sind, gibt es bei den Verfahren nach den gegenwärtigen Stand der Technik keine Möglichkeit, dies in die LOD-Auswahl miteinzubeziehen. Zwar werden bei den bekannten Verfahren unsichtbare, d.h. vom Betrachter abgewandte Flächenstücke, von der Graphik-Hardware entdeckt und nicht dargestellt, jedoch resultiert daraus aufgrund der Pipeline-Architektur in den meisten Implementierungen kaum eine Verringerung der Berechnungszeiten. Wird beispielsweise die Relevanz bzw. Bedeutung eines Objekts sehr hoch eingestuft, da es dem Betrachter sehr naheliegt oder weil es sich im Zentrum eines Bildschirms befindet, so ist der Verlust an Berechnungskapazität durch die Behandlung der unsichtbaren Polygone bzw. Flächenstücke sehr hoch.
Ein weiterer besonders gravierender Nachteil bei den Verfahren nach dem Stande der Technik besteht darin, daß, falls die Darstellungsleistung eines vorgegebenen Computers nicht ausreicht um eine Objektbeschreibung mit maximaler Genauigkeit im gesetzten Zeitrahmen zu visualisieren, von der angestrebten Bildwiederholrate abgewichen werden muß, was je nach Anwendungsgebiet drastische Folgen haben kann. Um ein Abweichen von der angestrebten Bildwiederholrate zu verhindern, kann daher versucht werden, das Objekt vor der Reduktion statisch in Teilobjekte zu zerlegen. Dies hat jedoch den deutlichen Nachteil, daß die Randbereiche der Teilobjekte, d.h. die Stellen, an denen sich die Teilobjekte berühren, von der Reduktion ausgenommen werden müssen, da ansonsten bei der dreidimensionalen Darstellung Lücken in der Objektoberfläche entstehen, wenn zwei benachbarte Teilobjekte mit unterschiedlicher Genauigkeit gezeichnet werden. Dies wirkt sich besonders negativ auf die erzielbaren Reduktionsraten aus und verhindert vor allem, daß die Teilbereiche sehr klein gewählt werden können. Zusätzlich verhindert eine solche statische Objektunterteilung eine Anpassung der Grenzen zwischen zwei Genauigkeitsbereichen während des Visualisierungsprozesses.

Bei dem Progressive-meshes-Verfahren besteht ein Schwachpunkt darin, daß die meisten Echtzeit-Anwendungen nicht unterstützt werden. Dies liegt daran, daß die Verfeinerungsliste linear aufgebaut ist. Da diese lineare Listenstruktur nur eine sequentielle Abarbeitung erlaubt, muß zur Darstellung eines Objekts mit variabler Genauigkeit die komplette Liste durchlaufen werden. Insbesondere bei der Darstellung komplexer geometrischer Objekte mit einer großen Flächenanzahl bedeutet das Durchlaufen der kompletten Verfeinerungsliste bei dem bekannten Progressive-meshes-Verfahren einen sehr hohen Berechnungsaufwand, der auf den meisten Systemen zum Verlust der Echtzeit-Fähigkeit führt. Unabhängig davon, ob zu einem früheren Zeitpunkt ein Teilobjekt bereits als ausreichend genau erkannt wurde, müssen bei der Abarbeitung die folgenden Listenelemente zur Verfeinerung dieses Teilobjekts abgearbeitet werden, um dann lediglich festzustellen, daß keine weitere Verfeinerung dieses Objektbereichs mehr nötig ist.
Ein weiterer Nachteil des Progressive-meshes-Verfahrens besteht darin, daß zwischen den Einzelschritten der Verfeinerungsliste Datenabhängigkeiten bestehen, die eine sequentielle Abarbeitung erzwingen. Dies bedeutet, daß die hohe Rechnerbelastung nicht effizient auf mehrere Prozessoren verteilbar ist.
Das bekannte Progressive-meshes-Verfahren besitzt eine geringe Abarbeitungsflexibilität, da weder die Definition einer minimal erlaubten noch einer maximal erforderlichen Genauigkeit der Objektdarstellung den Aufwand bei der Listenabarbeitung reduziert.
Ein weiterer Nachteil bei dem Progressive-meshes-Verfahren besteht darin, daß keine hierarchische Sichtbarkeitsentscheidung möglich ist. Wird beispielsweise bei einem Verfeinerungsschritt innerhalb der linearen Liste festgestellt, daß das entsprechende Teilobjekt nicht sichtbar ist, so kann diese Information im weiteren Verlauf des Verfahrens nicht verwendet werden, um die Abarbeitung zu beschleunigen.

Hierarchische Datenstrukturen werden verwendet von den beiden Verfahren zur kontinuierlichen Veränderung der Darstellungsgenauigkeit in M.H. Gross, R. Gatti und O. Staadt: "Fast Multiresolution Surface Meshing", Proc. of the Visualization Conference, IEEE, 1995, und S. Falby et al.: "NPSNET: Hierarchical Data Structures For Real-Time Three-Dimensional Visual Simulation", Computers & Graphics, Vol. 17, Nr. 1, 1993, bei Falby et al. in einer Realisierung über Files, die Zeiger auf Speicherbereiche mit Polygondaten enthalten. Letzteres Verfahren erwähnt ausserdem die Möglichkeit einer hierarchischen Sichtbarkeitsentscheidung.

Es ist daher die Aufgabe der Erfindung ein Verfahren zu schaffen, das die oben genannten Nachteile vermeidet und eine signifikante Reduktion der Objektkomplexität ermöglicht und gleichzeitig relevante Objektteile mit maximaler Genauigkeit darstellt.

Diese Aufgabe wird durch ein Verfahren mit den im Patentanspruch 1 oder 2 angegebenen Merkmalen gelöst.

Weitere vorteilhafte Ausgestaltungen der Erfindung ergeben sich aus den Unteransprüchen.

Ein Vorteil des erfindungsgemäßen Verfahrens besteht darin, daß durch den Aufbau einer hierarchischen Datenstruktur die Abarbeitung eines Unterbaums unterbleiben kann, sobald die erforderliche Genauigkeit erreicht wird. Die hierarchische Datenstruktur erlaubt ferner die Abarbeitung effizient zu parallelisieren.
Die hierarchische Datenstruktur gemäß der Erfindung ermöglicht die Entscheidung, ob ein entsprechendes Teilobjekt sichtbar ist auf der Basis von Flächengruppen. Ein weiterer Vorteil des Verfahrens besteht daher darin, daß es eine frühest mögliche Detektion von komplett unsichtbaren bzw. komplett sichtbaren Teilobjekten und eine entsprechende Steuerung der Abarbeitung der hierarchischen Datenstruktur erlaubt. Wird beispielsweise festgestellt, daß ein Teilobjekt unsichtbar ist, wird gemäß des erfindungsgemäßen Verfahrens der hierarchisch niedriger angesiedelte Teil der hierarchischen Datenstruktur des Teilobjekts ignoriert.

Ein weiterer Vorteil des erfindungsgemäßen Verfahrens ist, daß die Genauigkeitsabstufung entlang der Oberfläche des Objekts nicht schon während des Reduktionsvorgangs feststehen muß, sondern variabel bei der Darstellung definiert werden kann.

Im folgenden wird eine bevorzugte Ausführungsform des erfindungsgemäßen Verfahrens anhand der Zeichnung beschrieben.

Es zeigen:
- Figur 1a: eine skizzenhafte Darstellung einer Vorrichtung zur Durchführung des erfindungsgemäßen Verfahrens;
- Figur 1b: die Aufteilung des in Figur 1a gezeigten Speichers in vier Speicherbereiche
- Figur 1c: eine schematische Darstellung einer zweiten Ausführungsform einer Vorrichtung zur Durchführung des erfindungsgemäßen Verfahrens;
- Figur 2a: ein Ablaufdiagramm des erfindungsgemäßen Verfahrens;
- Figuren 2b-2j: Ablaufdiagramme der in der Figur 2a dargestellten Einzelschritte des erfindungsgemäßen Verfahrens;
- Figur 3a, b, c: einen beispielhaften Oberflächenausschnitt eines Objekts sowie die zugehörige hierarchische Datenstruktur und die zugehörige Speicherbelegung nach Durchführung der ersten beiden Schritte des erfindungsgemäßen Verfahrens;
- Figur 4a, b, c: den Oberflächenausschnitt, die zugehörige hierarchische Datenstruktur sowie die im Speicher gespeicherten Daten nach einer ersten Iteration des dritten und vierten Schrittes des erfindungsgemäßen Verfahrens;
- Figur 5a, b, c: den Oberflächenausschnitt, die zugehörige hierarchische Datenstruktur sowie die im Speicher gespeicherten Daten nach einer zweiten Iteration des dritten und vierten Schrittes des erfindungsgemäßen Verfahrens;
- Figur 6a, b, c: den Oberflächenausschnitt, die zugehörige hierarchische Datenstruktur sowie die im Speicher gespeicherten Daten nach einem fünften Schritt des erfindungsgemäßen Verfahrens.
- Figur 7a, b: die aufgebauten Oberflächenabschnitte sowie die zugehörigen im Speicher gespeicherten Daten nach einer ersten Iteration des sechsten, siebten und achten Schrittes des erfindungsgemäßen Verfahrens;
- Figur 8a, b: den aufgebauten Oberflächenausschnitt sowie die zugehörigen im Speicher gespeicherten Daten nach einer zweiten Iteration des sechsten, siebten und achten Schrittes des erfindungsgemäßen Verfahrens.

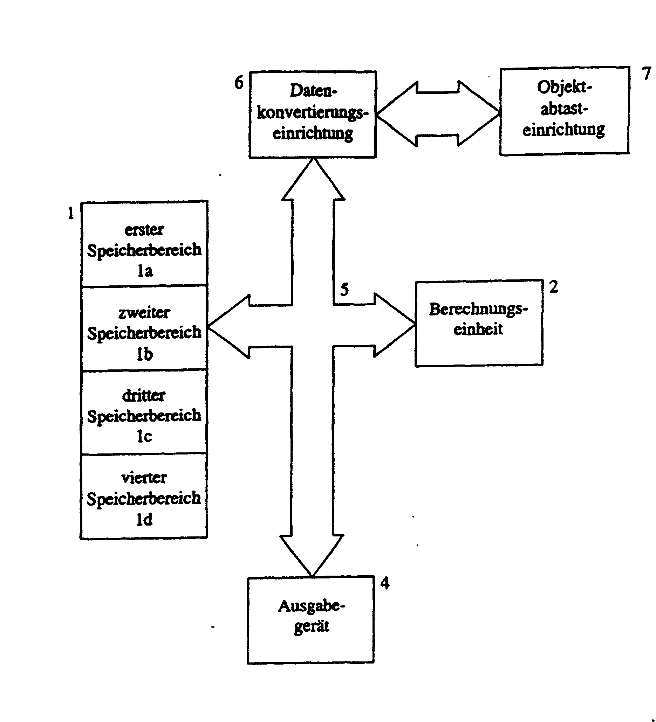

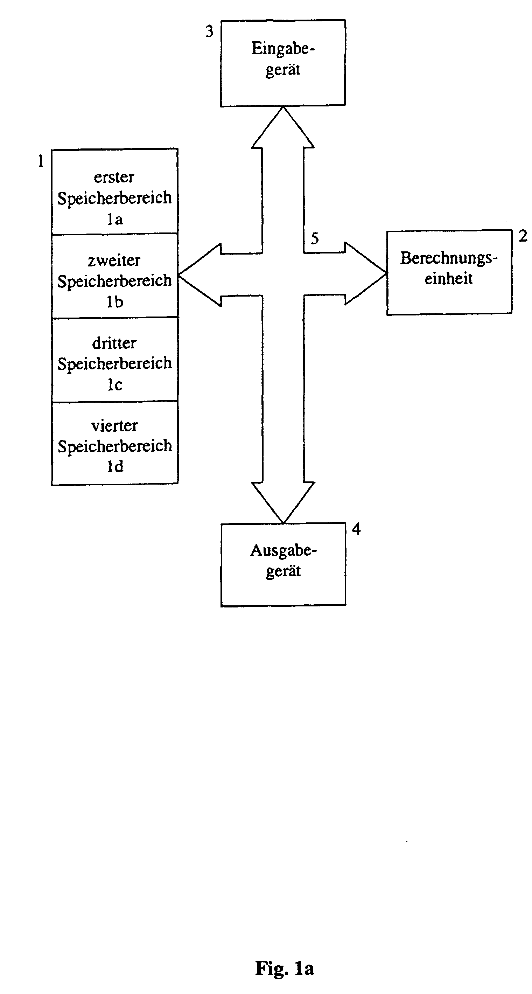

Figur 1a zeigt schematisch den Aufbau einer Vorrichtung zur Durchführung des erfindungsgemäßen Verfahrens. Die Vorrichtung weist einen Speicher 1 auf, welcher in Speicherbereiche 1a, 1b, 1c, 1d aufgeteilt ist. Der Speicher 1 ist über einen Bus 5 mit einer Berechnungseinheit 2, einem Eingabegerät 3 sowie einem Ausgabegerät 4 verbunden. Der Bus 5 besteht vorzugsweise aus einem Adress-, Daten- sowie Steuerbus. Bei der Berechnungseinheit 2 kann es sich beispielsweise um einen Prozessor handeln. Das Ausgabegerät 4 ist vorzugsweise ein Bildschirm. Die in Figur 1a gezeigte Vorrichtung kann auch mehrere Eingabegeräte sowie Ausgabegeräte umfassen. Das Eingabegerät 3 ist vorzugsweise eine Tastatur oder eine Maus, durch welche geometrische Daten zur Darstellung eines Objekts eingegeben werden können.

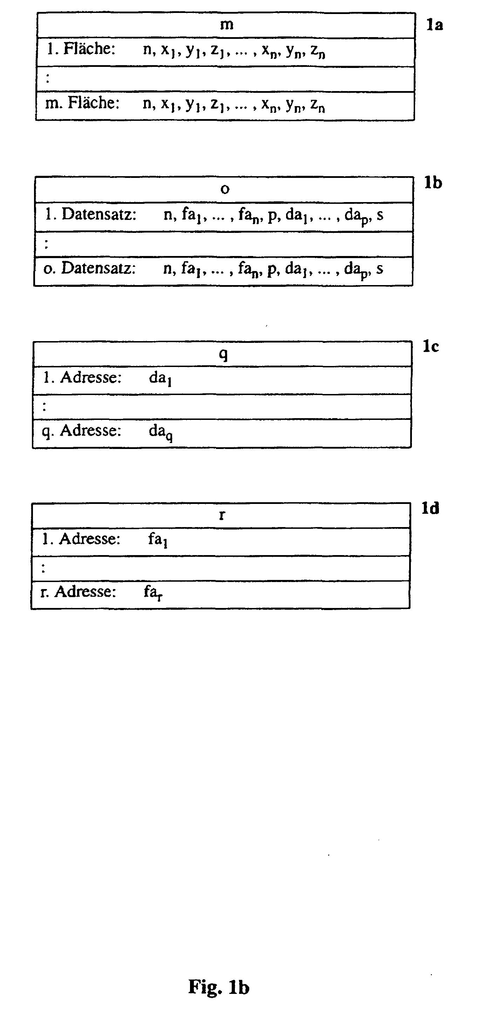

Figur 1b stellt die Aufteilung des in Figur 1a gezeigten Speichers 1 dar. Der Speicher 1 ist in einen ersten Speicherbereich 1a, einen zweiten Speicherbereich 1b, einen dritten Speicherbereich 1c sowie einen vierten Speicherbereich 1d aufgeteilt.

In den ersten Speicherbereich 1a sind Flächendatenelemente einspeicherbar, welche zusammen die Objektoberfläche eines darzustellenden Objektes bilden. In den Speicherbereich 1a wird die Anzahl der gespeicherten Flächendatenelemente m in einer Adresse abgespeichert. In weiteren Adressen werden das erste bis m-te Flächendatenelement in den ersten Speicherbereich 1a abgespeichert. Jedes abgespeicherte Flächendatenelement gibt zunächst die Anzahl n der Eckpunkte einer Fläche an. Diese Anzahl n ist beispielsweise für Dreiecke gleich 3. Das Flächendatenelement kann n-Ecke mit einer beliebigen Anzahl von Eckpunkten angeben. Neben der Anzahl der Eckpunkte einer Fläche n sind in jedem Flächendatenelement, das im ersten Speicherbereich 1a abgespeichert ist, die Koordinaten x, y, z für alle Eckpunkte der Fläche abgespeichert. Jedes Flächendatenelement entspricht einem beliebigen n-Eck.

Zur Darstellung dreidimensionaler Objekte werden für jeden Eckpunkt drei Koordinaten abgespeichert. Zur Darstellung zweidimensionaler Objekte genügt die Abspeicherung von jeweils zwei Koordinaten je Eckpunkt.

Wie in Figur 1b zu sehen ist, sind in den ersten Speicherbereich 1a m Flächendatenelemente abgespeichert, welche m Flächen eines Objektes darstellen. Jedes beliebige Objekt ist durch ein feines Gitternetz beschreibbar, das durch eine große Anzahl von n-eckigen Flächen aufgebaut werden kann. Bei einer bevorzugten Ausführungsform der Erfindung wird das Gitternetz ausschließlich aus Dreiecken aufgebaut. Bei Dreiecken müssen nur jeweils die Koordinaten von drei Eckpunkten in einem Flächendatenelement abgespeichert werden.

Der Speicher 1 weist einen zweiten Speicherbereich 1b auf, wie in Figur 1b dargestellt ist. In dem zweiten Speicherbereich 1b sind Datensätze einer hierarchischen Datenstruktur abspeicherbar. In einer ersten Adresse des zweiten Speicherbereichs 1b wird die Anzahl der gespeicherten Datensätze o abgespeichert. In weiteren Adressen werden die Datensätze hintereinander abgespeichert. Jeder Datensatz enthält dabei eine Zahl n, welche die Anzahl von Zeigeradresse des Datensatzes auf Flächendatenelemente im ersten Speicherbereich 1a angibt. Daneben enthält jeder Datensatz die Zeigeradressen fa auf Flächendatenelemente im ersten Speicherbereich 1a. Danach folgt eine Zahl p, welche die Anzahl der Zeigeradressen auf Datensätze im zweiten Speicherbereich 1b angibt. Daran schließen sich die verschiedenen Zeigeradressen da auf Datensätze im zweiten Speicherbereich 1b an. Schließlich enthält jeder Datensatz eine Zahl S, welche die Reduktionsstufe des Datensatzes anzeigt. Die Reduktionsstufe S zeigt, mit welcher Genauigkeit der Datensatz die Objektoberfläche angibt. Je höher die Reduktionsstufe S ist, desto geringer ist die Genauigkeit, mit welcher der Datensatz die Objektoberfläche darstellt. Die Genauigkeitsstufe des im Speicherbereich 1b abgespeicherten Datensatzes ergibt sich, indem man von einer maximal möglichen Reduktionsstufe Sₘₐₓ, die Reduktionsstufe s subtrahiert. Je höher die Genauigkeitsstufe eines Datensatzes, desto höher ist die Genauigkeit, mit welcher der Datensatz die Objektoberfläche beschreibt.

Der Speicher 1 weist einen dritten Speicherbereich 1c auf, in welchen Adressen noch zu verarbeitender Datensätze abgespeichert werden. Dazu wird in einer ersten Adresse des dritten Speicherbereichs 1c die Anzahl q der gespeicherten Zeigeradressen auf noch zu verarbeitende Datensätze abgespeichert. Daran schließen sich die in weiteren Adressen des dritten Speicherbereichs 1c abgespeicherten Zeigeradressen da auf noch zu verarbeitende Datensätze im zweiten Speicherbereich 1b an.

Der Speicher 1 weist einen vierten Speicherbereich 1d auf, in welchem Adressen auszugebender Flächendatenelemente abgespeichert sind. In einer ersten Adresse des vierten Speicherbereichs 1d wird die Anzahl r der gespeicherten Zeigeradressen auf Flächendatenelemente abgespeichert. Anschließend daran sind die verschiedenen Zeigeradressen fa auf Flächendatenelemente im ersten Speicherbereich 1a abgespeichert. Die im vierten Speicherbereich der Speichereinheit 1 adressierten Flächendatenelemente, welche im Speicherbereich 1a abgespeichert sind, werden nach Durchführung des Verfahrens an das Ausgabegerät 4 zur geometrischen Darstellung des Objektes ausgegeben.

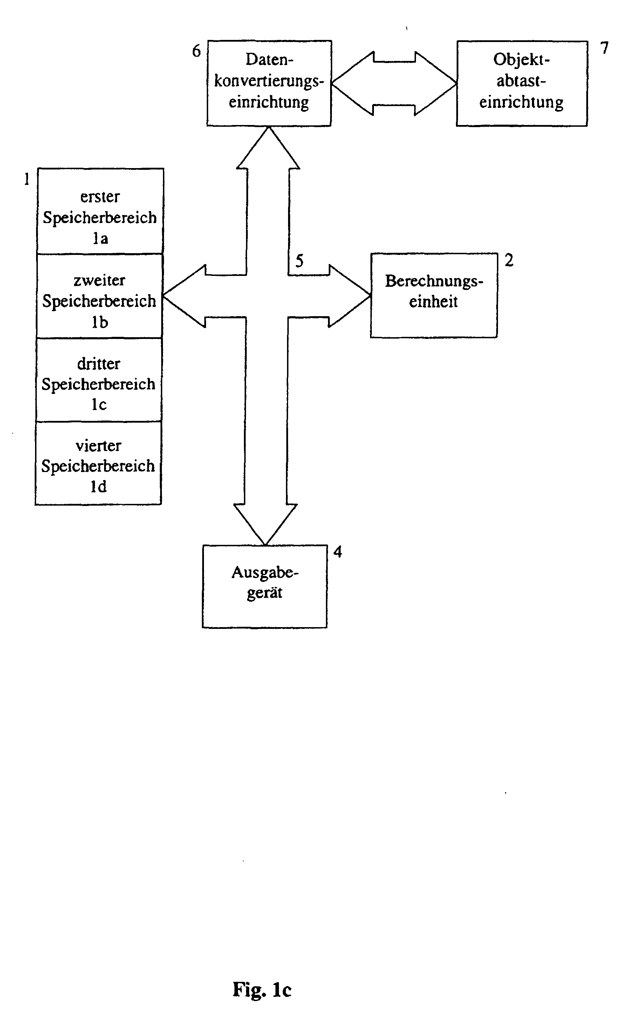

Figur 1c zeigt eine weitere Ausführungsform der Vorrichtung zur Durchführung des Verfahrens. Die in Figur 1c gezeigte Vorrichtung unterscheidet sich von der in Figur 1a gezeigten Vorrichtung dadurch, daß das Eingabegerät 3 durch eine Datenkonvertierungseinrichtung 6 sowie eine Objektabtasteinrichtung 7 ersetzt ist. Die Objektabtasteinrichtung 7 tastet ein darzustellendes zwei- oder dreidimensionales Objekt ab und gibt Ausgabedaten an eine Datenkonvertierungseinrichtung 6 ab. Die Datenkonvertierungseinrichtung 6 wandelt die von der Objektabtasteinrichtung 7 abgegebenen Daten in ein für das erfindungsgemäße Verfahren geeignetes Datenformat um. vorzugsweise gibt diese Datenkonvertierungseinrichtung 6 die Daten so ab, daß sie in den ersten Speicherbereich 1a der Speichereinheit direkt abgespeichert werden können. Dazu werden die Daten ausgehend von der Datenkonvertierungseinrichtung 6 über den Datenbus in den ersten Speicherbereich 1a der Speichereinheit 1 eingeschrieben. Die Objektabtasteinrichtung 7 ist beispielsweise ein Scanner, durch welchen Objekte abgetastet werden. Die Erfassung von dreidimensionalen Strukturen erfolgt beispielsweise durch einen lasergestützten Scanner oder durch Rekonstruktion aus mehreren Fotographien. Die dreidimensionalen Daten können aber auch durch Röntgencomputer- oder Kernspintomographie sowie dreidimensionale Ultraschalltechniken erzeugt werden.

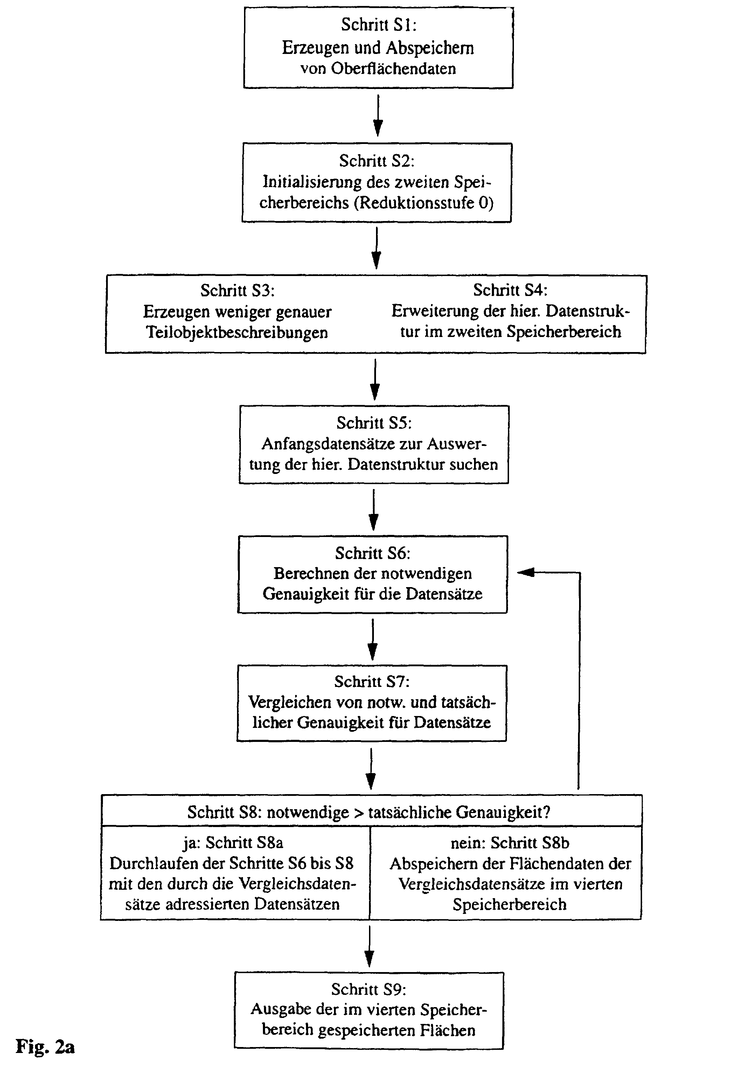

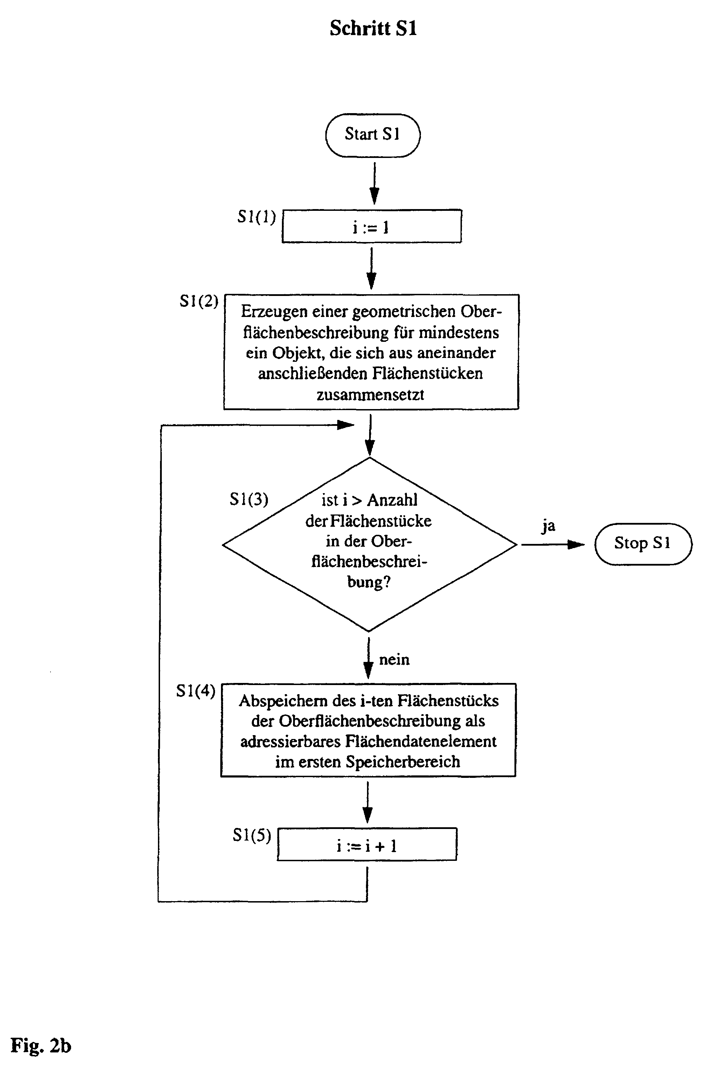

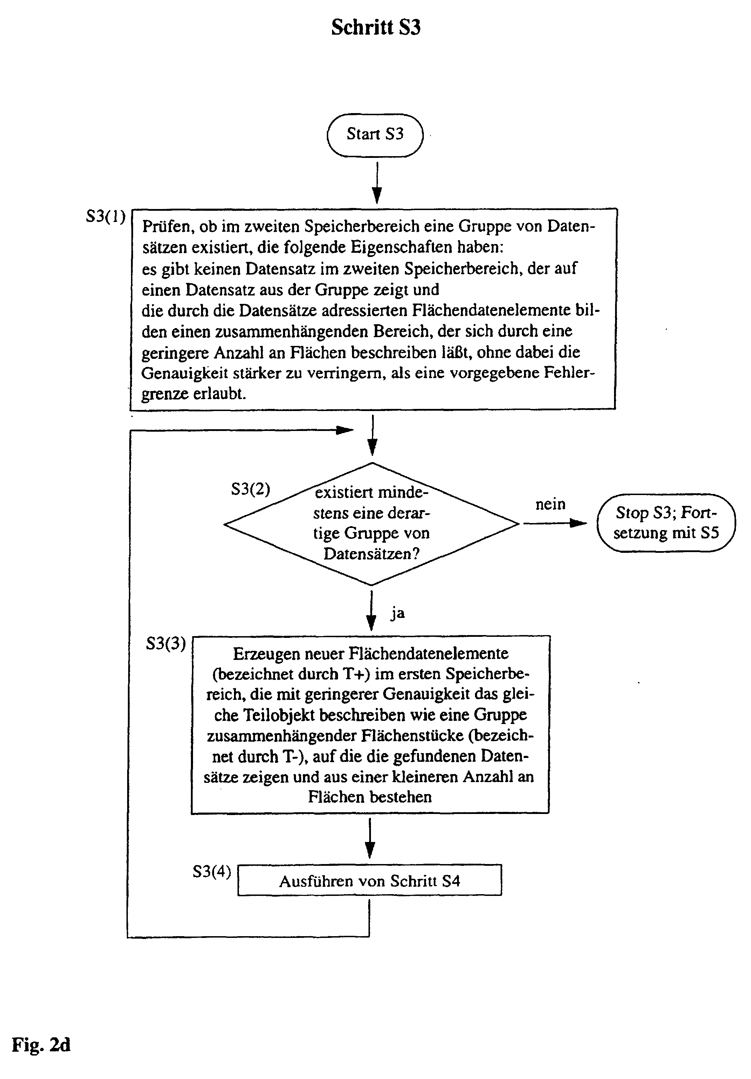

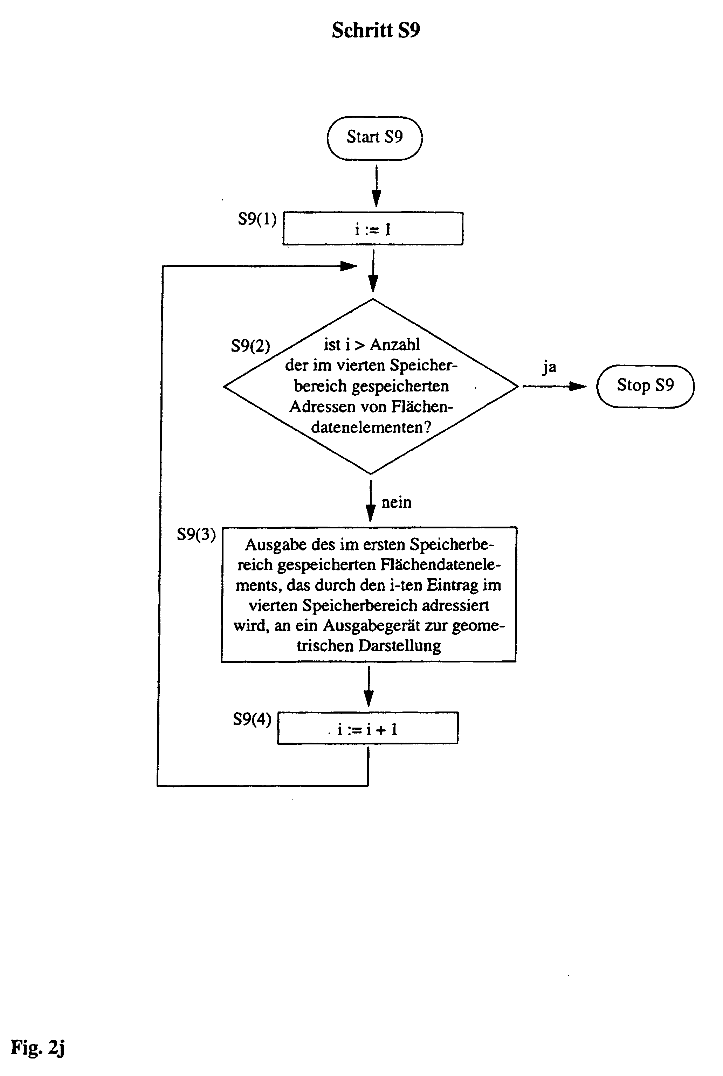

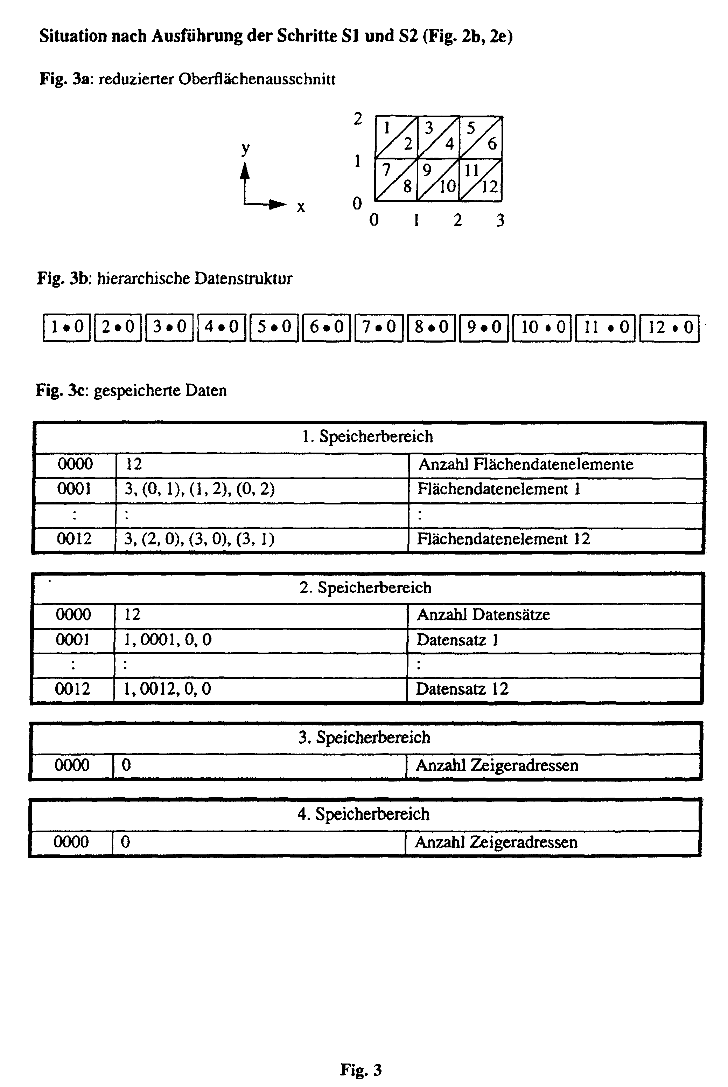

Figur 2a zeigt ein Ablaufdiagramm, welches das erfindungsgemäße Verfahren in einem Gesamtüberblick darstellt. Das erfindungsgemäße Verfahren weist mehrere Schritte auf, welche im Zusammenhang mit den Figuren 2b bis 2j noch näher erläutert werden. Das erfindungsgemäße Verfahren dient zur Anzeige von geometrischen Objektoberflächen an dem Ausgabegerät 4 mit einer variablen Genauigkeit.

Bei dem erfindungsgemäßen Verfahren werden beim ersten Schritt S1 Oberflächendaten von mindestens einem Objekt erzeugt und diese Oberflächendaten als Koordinaten von Eckpunkten abgespeichert. Die Eckpunkte sind die Eckpunkte an einander anschließender Flächen, welche das zwei- oder dreidimensionale Objekt darstellen. Auch Objekte einer höheren Dimension, beispielsweise vierdimensionale mathematische Objekte, sind abspeicherbar. Die Koordinaten der Eckpunkte werden als adressierbare Flächendatenelemente in dem ersten Speicherbereich 1a der Speichereinheit 1 abgespeichert.

In einem zweiten Schritt S2 wird für jedes im ersten Speicherbereich 1a abgespeicherte Flächendatenelement ein Datensatz erzeugt, welcher eine Zeigeradresse auf das jeweilige Flächendatenelement enthält und eine Reduktionsstufe null besitzt. Dieser erzeugte Datensatz wird in den zweiten Speicherbereich 1b der Speichereinheit 1 abgespeichert. Der zweite Schritt S2 des Verfahrens dient der Initialisierung des zweiten Speicherbereichs 1b der Speichereinheit 1. Danach werden parallel ein dritter und vierter Schritt S3, S4 des Verfahrens durchgeführt. Im dritten Schritt S3 werden zusätzliche Flächendatenelemente zur Darstellung von Teilobjekten mit einer verminderten Genauigkeit erzeugt und in dem ersten Speicherbereich 1a abgespeichert. Dabei vermindert sich die Genauigkeitsstufe der Objektoberflächendarstellung, d.h. das Objekt wird mit einer geringeren Genauigkeit beschrieben.

Parallel zu dem dritten Schritt S3 wird in einem vierten Schritt S4 eine hierarchische Datenstruktur mit mehreren über Zeigeradressen adressierbaren Datensätzen zur Darstellung eines Teils der Objektoberfläche mit einer bestimmten Genauigkeitsstufe in dem zweiten Speicherbereich 1b der Speichereinheit 1 abgespeichert. Dabei werden in jedem Datensatz mindestens eine Zeigeradresse auf Flächendatenelementen zur Beschreibung eines Teilobjekts, Zeigeradressen auf weitere Datensätze mit einer höheren Genauigkeitsstufe und die eigene Genauigkeitsstufe des Datensatzes abgespeichert. Die Datensätze mit einer höheren Genauigkeitsstufe, auf welche die Zeigeradressen zeigen, stellen zusammen den identischen Teil der Objektoberfläche wie der Datensatz selbst dar.

In dem darauf folgenden fünften Schritt S5 des erfindungsgemäßen Verfahrens werden die Zeigeradressen von denjenigen im zweiten Speicherbereich 1b abgespeicherten Datensätzen, auf die keine in anderen Datensätzen gespeicherte Zeigeradressen zeigen und welche zusammen das ganze Objekt mit der geringsten Genauigkeitsstufe beschreiben, in einem dritten Speicherbereich 1c der Speichereinheit 1 abgespeichert.

In einem sechsten Schritt S6 wird eine minimale Genauigkeitsstufe für die Darstellung des Teilobjektes, welches durch die Datensätze beschrieben wird, in der Berechnungseinheit 2 berechnet. Die Berechnung der minimalen Genauigkeitsstufe erfolgt auf der Grundlage verschiedener Kriterien, sogenannten LOD-Kriterien (LOD: Level of Detail). Bei den Kriterien handelt es sich um Kriterien, die das räumliche Verhältnis zwischen dem darzustellenden Objekt sowie dem Betrachter des darzustellenden Objektes betreffen. Beispielsweise kann der Abstand zwischen dem Betrachter und dem Objekt oder die Größe des Objektes bei der Darstellung als Kriterium herangezogen werden. Weitere Kriterien können sein die Lage des Objektes auf einem Ausgabebildschirm oder ob das Objekt im Zentrum des Sehfeldes des Betrachters oder an der Peripherie des Sehfeldes liegt. Die Berechnungseinheit 2 der Vorrichtung ermittelt anhand eines LOD-Berechnungsverfahrens die erforderliche minimale Genauigkeit, mit welcher das Objekt darzustellen ist.

In einem siebten Schritt S7 des Verfahrens wird die berechnete Minimalgenauigkeitsstufe für jeden Datensatz, dessen Adresse in dem dritten Speicherbereich 1c abgespeichert ist, mit der im Datensatz abgespeicherten Genauigkeitsstufe verglichen.

Danach wird das ermittelte Vergleichsergebnis für jeden Datensatz, dessen Adresse in dem dritten Speicherbereich 1c abgespeichert ist, ausgewertet.

In Abhängigkeit von dem ermittelten Vergleichsergebnis werden in einem achten Schritt S8 des erfindungsgemäßen Verfahrens entweder die Flächendaten des verglichenen Datensatzes in den vierten Speicherbereich 1d kopiert oder der sechste bis achte Schritt S6 - S8 mit den durch den Vergleichsdatensatz adressierte Datensätzen durchlaufen. Ist die gespeicherte Genauigkeitsstufe des verglichenen Datensatzes mindestens so groß wie die berechnete minimale Genauigkeitsstufe, werden die in dem verglichenen Datensatz gespeicherten Zeigeradressen auf Flächendatenelemente in den vierten Speicherbereich 1d der Speichereinheit 1 kopiert. Ist die gespeicherte Genauigkeitsstufe des verglichenen Datensatzes jedoch kleiner als die berechnete minimale Genauigkeitsstufe, werden die in dem verglichenen Datensatz gespeicherten Zeigeradressen auf Datensätze in den dritten Speicherbereich 1c kopiert.

In beiden Fällen wird danach die Zeigeradresse auf den verglichenen Datensatz im dritten Speicherbereich 1c gelöscht.

In einem neunten Schritt S9 des erfindungsgemäßen Verfahrens werden die in dem vierten Speicherbereich 1d der Speichereinheit 1 adressierten Flächendatenelemente an das Ausgabegerät 4 zur geometrischen Darstellung des Objektes abgegeben. Das Ausgabegerät 4 zeigt dann das Objekt mit der erforderlichen Genauigkeit an. Die erforderliche Genauigkeit wird durch die frei wählbaren LOD-Kriterien bestimmt.

Figur 2b zeigt den in Figur 2a dargestellten Schritt S1 im Detail. Im Schritt S1 werden die Oberflächendaten eines Objektes erzeugt und als Koordinaten von Eckpunkten aneinander anschließender, adressierbarer Flächendatenelemente, welche zusammen die Objektoberfläche bilden, in einem ersten Speicherbereich 1a abgespeichert. Dazu wird zunächst in einem Unterschritt S1 (1) ein Zähler i auf eins gesetzt. Danach werden in einem Unterschritt S1 (2) eine geometrische Oberflächenbeschreibung für mindestens ein Objekt, das sich aus aneinander anschließenden Flächenstücken zusammensetzt, erzeugt. In einem dritten Unterschritt S1 (3) wird der Zähler i mit der Anzahl der Flächenstücke in der Oberflächenbeschreibung verglichen. Ist der Zähler i größer als diese Anzahl, ist der Schritt S1 beendet. Ist der Zähler i kleiner als die Anzahl der Flächenstücke in der Obenflächenbeschreibung, wird in einem Unterschritt S1 (4) das i-te Flächenstück der Oberflächenbeschreibung als adressierbares Flächendatenelement in dem ersten Speicherbereich 1a abgespeichert. Daraufhin wird in einem fünften Unterschritt S1 (5) der Zähler um eins erhöht und man kehrt zu dem dritten Unterschritt S1 (3) zurück. Die Schleife S1 (3), S1 (4), S1 (5) wird so lange durchlaufen bis i größer als die Anzahl der Flächenstücke in der Oberflächenbeschreibung ist.

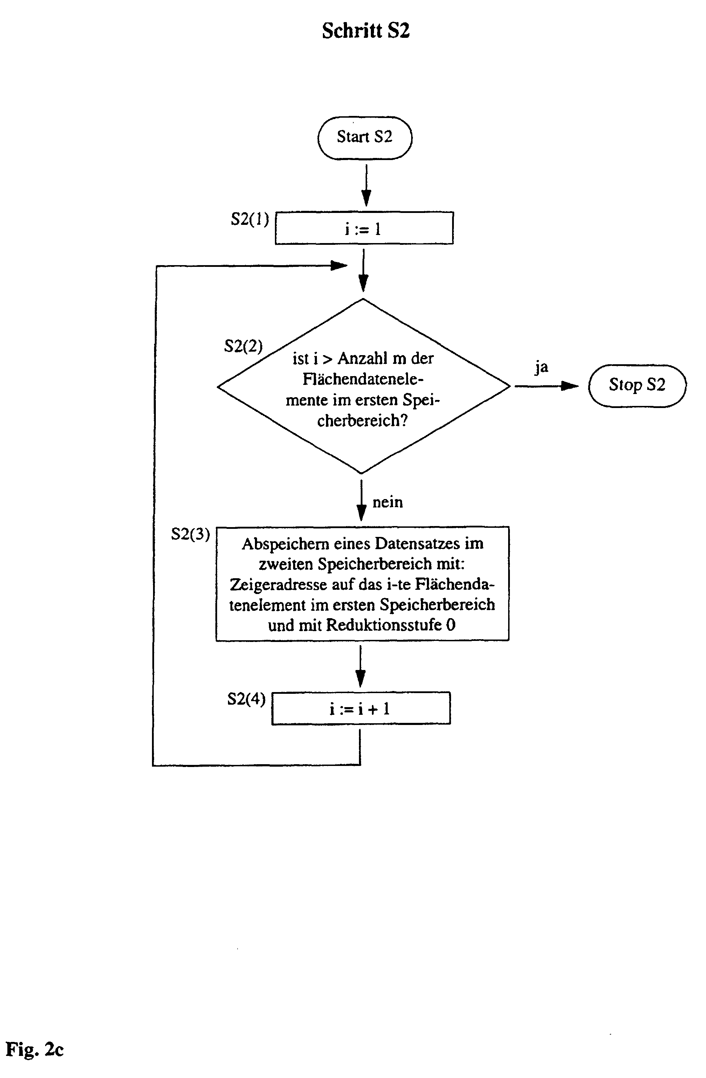

Figur 2c zeigt den zweiten Schritt S2 des erfindungsgemäßen Verfahrens im Detail. Im zweiten Schritt S2 des erfindungsgemäßen Verfahrens wird für jedes im ersten Speicherbereich 1a abgespeicherte Flächendatenelement ein Datensatz, der eine Zeigeradresse auf das jeweilige Flächendatenelement enthält und eine Reduktionsstufe null besitzt, erzeugt und der Datensatz in einem zweiten Speicherbereich 1b der Speichereinheit 1 abge speichert. Dazu wird in einem ersten Unterschritt S2 (1) ein Zähler auf eins gesetzt. Danach wird in einem zweiten Unterschritt S2 (2) der Zähler mit der Anzahl der Flächendatenelemente im ersten Speicherbereich 1a verglichen. Ist der Zähler größer als diese Anzahl, ist Schritt S2 beendet. Ist der Zähler jedoch kleiner als die Anzahl der Flächendatenelemente im ersten Speicherbereich 1a, wird der Datensatz in dem zweiten Speicherbereich 1b abgespeichert. Der Datensatz enthält dabei eine Zeigeradresse auf das i-te Datenelement im ersten Speicherbereich 1a sowie eine Zahl, welche angibt, daß die Reduktionsstufe null ist. Danach wird in einem vierten Unterschritt S2 (4) der Zähler erhöht und die Schleife S2 (2), S2 (3) sowie S2 (4) so lange durchlaufen bis der Zähler größer als die Anzahl der Flächendatenelemente im ersten Speicherbereich 1a ist. Figur 3 zeigt die Situation nach der Ausführung Schritte S1 und S2 des erfindungsgemäßen Verfahrens.

Figur 3a zeigt einen einfachen Oberflächenausschnitt eines darzustellenden Objektes. Das in Figur 3a dargestellte Flächenstück, welches lediglich als ein Beispiel zur Veranschaulichung des Verfahrens dienen soll, setzt sich aus zwölf Dreiecken zusammen. Die zwölf dargestellten Dreiecke weisen jeweils drei Eckpunkte auf. Das in der Figur 3a dargestellte Oberflächenstück ist zweidimensional, so daß jeder Eckpunkt der Dreiecke durch zwei Koordinaten darstellbar ist. Setzt man beispielsweise den Koordinatenursprung an das linke untere Ende des dargestellten Oberflächenausschnittes, weisen beispielsweise die drei Eckpunkte des ersten Dreiecks 1 die folgenden Koordinaten auf, nämlich die ersten Eckpunkte die Koordinaten (0,1), der zweite Eckpunkt die Koordinaten (0,2) und der dritte Eckpunkt die Koordinaten (1,2). Auf diese Weise sind alle n-Ecke bzw. Dreiecke der Objektoberfläche durch die Koordinaten der Eckpunkte darstellbar.

In Figur 3b ist die hierarchische Datenstruktur für das in Figur 3a skizzierte Oberflächenstück dargestellt. Die hierarchische Datenstruktur besteht aus zwölf Elementen, die von 1 bis 12 durchnumeriert sind, wobei jedes Element neben der Zeigeradresse des jeweiligen Flächendatenelements eine Angabe über die Reduktionsstufe enthält. In dem dargestellten Beispiel weisen die zwölf Elemente der hierarchischen Datenstruktur jeweils eine Reduktionsstufe null auf. Dies bedeutet, daß die Oberflächendarstellung bisher noch nicht reduziert wurde, mit anderen Worten, daß die Oberfläche des Objektes mit einer maximalen Genauigkeit dargestellt wird.

Figur 3c zeigt die gespeicherten Daten nach der Durchführung des ersten und zweiten Schrittes S1, S2 des erfindungsgemäßen Verfahrens bei dem in Figur 3a gezeigten Objekt. Im ersten Speicherbereich 1a des Speichers sind die Oberflächendaten des Objekts als Koordinaten der Eckpunkte abgespeichert. In der ersten Adresse 0000 des ersten Speicherbereichs 1a ist die Anzahl der abgespeicherten Flächendatenelemente angegeben. In dem gezeigten Beispiel sind zwölf Flächendatenelemente in dem ersten Speicherbereich 1a abgespeichert. In den daran anschließenden Adressen 0001 bis 0012 des ersten Speicherbereichs 1a sind die verschiedenen Flächendatenelemente 1 bis 12 abgespeichert. Jedes Flächendatenelement entspricht genau einer Fläche. In dem Flächendatenelement ist die Anzahl der Eckpunkte der Fläche n abgespeichert sowie die Koordinaten dieser Eckpunkte. Beispielssweise ist in der Adresse 0012 des Speicherbereichs 1a das Flächendatenelement 12 abgespeichert, wobei das Flächendatenelement 12 eine dreieckige Fläche darstellt. Somit ist die Anzahl der Eckpunkte n der Fläche 12 gleich drei. Danach folgen die kartesischen Koordinaten der drei Eckpunkte der Fläche 12.

Neben kartesischen Koordinaten können beliebige Koordinatensysteme zur Durchführung des Verfahrens verwendet werden, beispielsweise Polarkoordinaten.

Nach dem Abspeichern der Oberflächendaten wird in dem zweiten Schritt S2 des Verfahrens für alle abgespeicherten Flächendatenelemente jeweils ein Datensatz erzeugt, der eine Zeigeradresse auf das jeweilige Flächendatenelement enthält und welcher eine Reduktionsstufe null besitzt. Danach wird dieser Datensatz in dem zweiten Speicherbereich 1b der Speichereinheit 1 abgespeichert.

Wie aus Figur 3c zu sehen ist, ist in der Adresse 0000 des zweiten Speicherbereichs 1b die Anzahl der Datensätze abgespeichert. Diese Anzahl wird zunächst 12, da für jedes Flächendatenelement 1 bis 12 jeweils ein Datensatz 1 bis 12 erzeugt wird. Der erste Datensatz ist in der Adresse 0001 des zweiten Speicherbereichs 1b abgespeichert. Jeder in dem zweiten Speicherbereich 1b abgespeicherte Datensatz enthält eine Zahl, welche die Anzahl der Zeigeradressen des Datensatzes auf Flächendatenelemente in dem ersten Speicherbereich 1a angibt. Beispielsweise besitzt der in der Adresse 0001 des Speicherbereichs 1b abgespeicherte Datensatz 1 lediglich eine Zeigeradresse 0001 auf das Flächendatenelement 1 im ersten Speicherbereich 1a. Daher ist die Anzahl der Zeigeradressen auf Flächendatenelemente im ersten Speicherbereich gleich eins. Dahinter ist in jedem Datensatz eine Zahl abgespeichert, welche die Anzahl der Zeigeradressen auf Datensätze in dem zweiten Speicherbereich 1b angibt. Beispielsweise besitzt der Datensatz 1 nach Durchführung der ersten beiden Schritte des Verfahrens keine Zeigeradresse auf Datensätze in dem zweiten Speicherbereich 1b. Somit ist die Zahl p, welche die Anzahl der Zeigeradressen auf Datensätze in dem zweiten Speicherbereich 1b angibt, gleich null. Schließlich wird in jedem Datensatz die Reduktionsstufe des Datensatzes abgespeichert. Beispielsweise ist die Reduktionsstufe s des Datensatzes 1 gleich null.

Der Datensatz 1 im zweiten Speicherbereich 1b weist eine Reduktionsstufe 0 auf, d.h. der Datensatz 1 beschreibt das Objekt mit einer maximalen Genauigkeit. Nach dem zweiten Schritt des erfindungsgemäßen Verfahrens weisen alle abgespeicherten Datensätze eine Reduktionsstufe 0 auf. Der zweite Schritt des Verfahrens dient der Initialisierung des zweiten Speicherbereichs. Der dritte Speicherbereich 1c sowie der vierte Speicherbereich 1d der Speichereinheit sind nach den ersten beiden Schritten des erfindungsgemäßen Verfahrens noch leer, wie in Fig. 3c gezeigt ist.

Nach Beenden des zweiten Schrittes werden der dritte und vierte Schritt des Verfahrens gemäß Fig. 2a parallel durchgeführt.

Fig. 2d zeigt den dritten Schritt S3 des erfindungsgemäßen Verfahrens im Detail. In dem dritten Schritt S3 werden zusätzliche Flächendatenelemente zur Darstellung des Objekts mit einer verminderten Genauigkeit, d.h. mit einer erhöhten Reduktionsstufe, erzeugt und in dem ersten Speicherbereich 1a abgespeichert, wobei sich die Genauigkeitsstufe der Oberflächendarstellung vermindert. Dazu wird in einem ersten Unterschritt S3(1) geprüft, ob in dem zweiten Speicherbereich 1b eine Gruppe von Datensätzen existiert, die bestimmte Eigenschaften erfüllen. Es wird geprüft, ob es in dem zweiten Speicherbereich 1b keinen Datensatz gibt, der auf den Datensatz der Gruppe zeigt, und ob die durch die Datensätze adressierten Flächendatenelemente einen zusammenhängenden Bereich bilden, der sich durch eine geringe Anzahl von Flächen beschreiben läßt, ohne dabei die Genauigkeit stärker zu verringern als es eine vorgegebene Fehlergrenze erlaubt.

In einem zweiten Unterschritt S3 (2) wird geprüft, ob mindestens eine derartige Gruppe von Datensätzen existiert. Existiert keine derartige Gruppe, ist der Schritt S3 beendet, und man gelangt zum Schritt S4.

Existiert jedoch eine derartige Gruppe von Datensätzen, werden in einem dritten Unterschritt S3(3) neue Flächendatenelemente in dem ersten Speicherbereich 1a erzeugt, die mit einer geringeren Genauigkeit das gleiche Teilobjekt beschreiben wie eine Gruppe zusammenhängender Flächenstücke, auf die die gefundenen Datensätze zeigen, und aus einer kleineren Anzahl von Flächen bestehen.

Mit T⁻ wird eine erste Gruppe von zusammenhängenden Flächendatenelementen im ersten Speicherbereich 1a bezeichnet, die zusammen eine bestimmte Teiloberfläche mit einer bestimmten Genauigkeit beschreiben.

Mit T⁺ wird eine zweite Gruppe von ebenfalls zusammenhängenden Flächendatenelementen im ersten Speicherbereich 1a bezeichnet, die zusammen die identische Teiloberfläche sowie die Gruppe T⁻ beschreiben, jedoch mit einer geringeren Genauigkeit als die Gruppe T⁻, wobei die Anzahl der Flächendatenelemente der Gruppe T⁺ geringer ist als die Anzahl der Flächendatenelemente der Gruppe T⁻.

M bezeichnet eine Menge von Datensätzen im zweiten Speicherbereich 1b, die Zeigeradressen auf Flächendatenelemente der Gruppe T- im ersten Speicherbereich 1a enthalten und auf die selbst keine Zeigeradressen anderer Datensätze im zweiten Speicherbereich 1b verweisen.

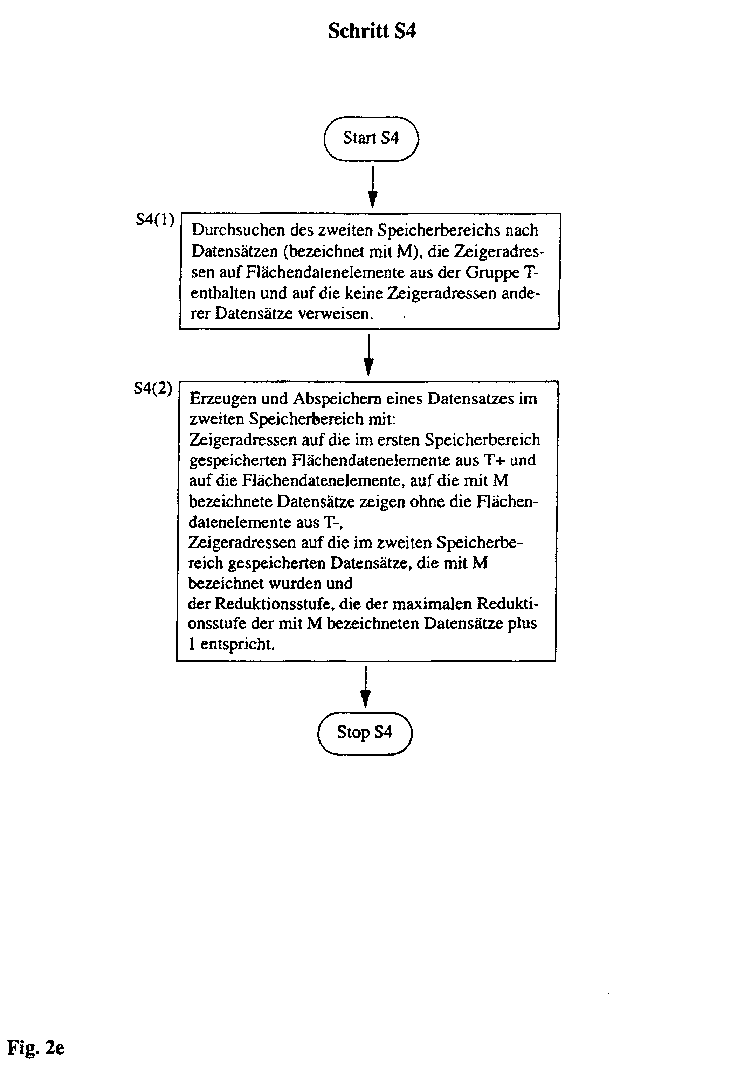

Fig. 2e zeigt den parallel zum Schritt S3 durchgeführten vierten Schritt S4 des erfindungsgemäßen Verfahrens. In einem ersten Unterschritt S4(1) wird der zweite Speicherbereich 1b der Speichereinheit 1 nach Datensätzen durchsucht, die Zeigeradressen auf Flächendatenelemente aus der Gruppe T⁻ enthalten und auf die keine Zeigeradressen anderer Datensätze verweisen. In einem zweiten Unterschritt S4(2) wird ein Datensatz erzeugt und in dem zweiten Speicherbereich 1b abgespeichert, wobei der Datensatz Zeigeradressen auf die im ersten Speicherbereich gespeicherten Flächendatenelemente aus der Gruppe T⁺ und auf Flächendatenelemente auf die mit M bezeichnete Datensätze zeigen, ohne die Flächendatenelemente aus der Gruppe T⁻. Ferner enthält der in dem zweiten Speicherbereich 1b abgespeicherte Datensatz Zeigeradressen auf die im zweiten Speicherbereich 1b gespeicherten Datensätze, die mit M bezeichnet sind, und die Reduktionsstufe. Die Reduktionsstufe entspricht der maximalen Reduktionsstufe der mit M bezeichneten Datensätze plus eins. In dem vierten Schritt des erfindungsgemäßen Verfahrens wird somit eine hierarchische Datenstruktur aufgebaut.

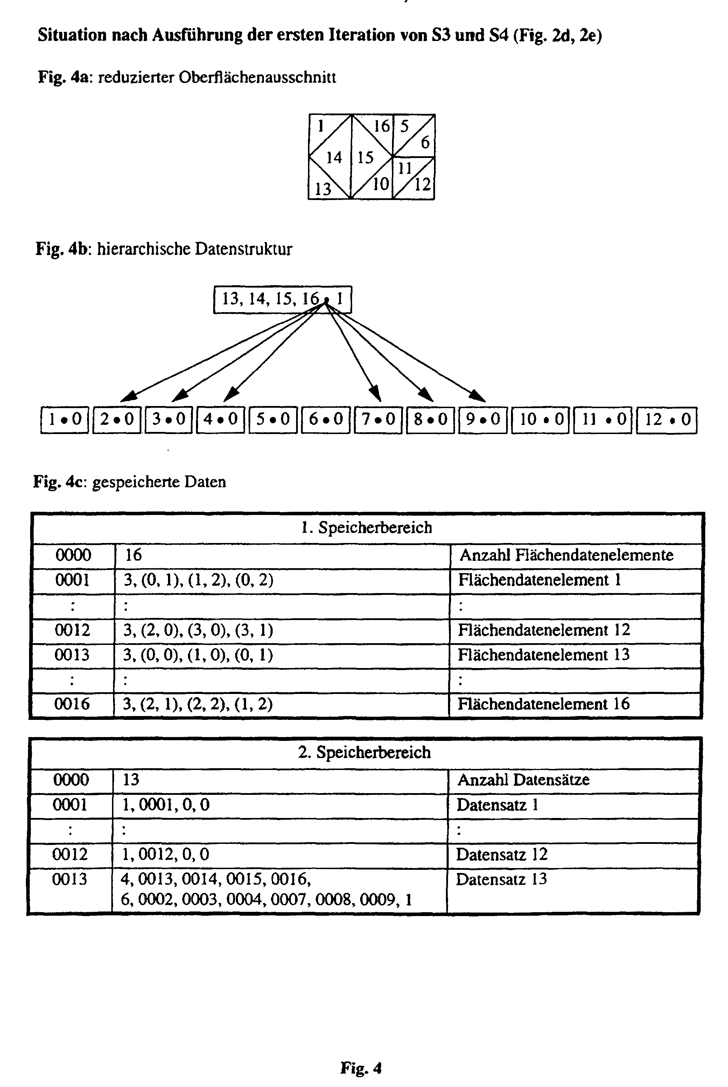

Fig. 4 zeigt die Speicherbelegung im Beispielfall nach der Ausführung einer ersten Iteration der Schritte S3 und S4 des erfindungsgemäßen Verfahrens.

Fig. 4a zeigt den in Fig. 3a dargestellten beispielhaften Oberflächenausschnitt nach der Durchführung eines ersten Reduktionsschrittes.

Die Fig. 4b stellt die in Fig. 3b illustrierte hierarchische Datenstruktur ebenfalls nach Durchführung einer ersten Iteration der Schritte 3 und 4 des erfindungsgemäßen Verfahrens dar.

Fig. 4c zeigt die entsprechende Veränderung der Daten in dem ersten und zweiten Speicherbereich der Speichereinheit nach der Durchführung einer ersten Iteration des dritten und vierten Schrittes gemäß dem erfindungsgemäßen Verfahren.

Wie in Fig. 4a zu erkennen ist, ist die Oberfläche des darzustellenden Objekts mit einer verminderten Genauigkeit dargestellt. Der Flächenbereich, welcher in Fig. 3a durch die Dreiecke 2, 3, 4, 7, 8 und 9 dargestellt wurde, wird nunmehr durch die Dreiecke 13, 14, 15 sowie 16 beschrieben. Die Anzahl der Dreiecke hat sich somit vermindert. Die übrigen Dreiecke 1, 10, 5, 6, 11, 12 sind gegenüber der Fig. 3a unverändert geblieben.

Fig. 4b zeigt die hierarchische Datenstruktur nach der Durchführung der ersten Iteration der Schritte 3 und 4 des erfindungsgemäßen Verfahrens. Die Datenstruktur, die ursprünglich aus 12 Elementen bestand, wurde um ein Element erweitert. Dieses Element umfaßt die Flächen 12, 13, 14, 15 sowie jeweils einen Zeiger auf die Elemente 2, 3, 4, 7, 8, 9 einer niedrigeren Reduktionsstufe. Das hinzugekommene Datenstrukturelement weist eine um 1 erhöhte Reduktionsstufe auf. Der in dem hinzugekommenen Datenstrukturelement dargestellte Pointer bzw. Zeiger gibt symbolisch Adressen auf hierarchisch untergeordneten Datenstrukturelementen an. Die durch das neue Element beschriebene Teilfläche, welche durch die Dreiecke 13, 14, 15, 16 beschrieben wird, ist identisch mit der durch die Flächen 2, 3, 4, 7, 8, 9 beschriebenen Teilfläche.

In Fig. 4c sind die in der Speichereinheit 1 gespeicherten Daten nach der Durchführung der ersten Iteration des dritten und vierten Schrittes gemäß der Erfindung abgebildet. Wie aus Fig. 4c hervorgeht, hat sich die Anzahl der in dem ersten Speicherbereich abgespeicherten Flächendatenelemente um vier erhöht. Diese Erhöhung entspricht der Anzahl der hinzugekommenen Dreiecke 13, 14, 15, 16. Diese Flächen 13, 14, 15, 16 werden als Flächendatenelemente 13 bis 16 zusätzlich in dem ersten Speicherbereich 1a der Speichereinheit 1 abgespeichert. In dem in Fig. 4c gezeigten Beispiel wird das Flächendatenelement 13 beispielsweise unter der Adresse 0013 in dem ersten Speicherbereich 1a abgespeichert.
In dem zweiten Speicherbereich 1b der Speichereinheit 1 hat sich im Vergleich zu dem in Fig. 3c gezeigten Zustand ebenfalls die Anzahl der Datensätze erhöht, und zwar um eins. Dies entspricht der Anzahl der hinzugekommenen Datenstrukturelemente, wie in Fig. 4b gezeigt ist. In Fig. 4b ist ein Datenstrukturelement, welches die Flächen 13, 14, 15, und 16 umfaßt, hinzugekommen. Dementsprechend ist in dem zweiten Speicherbereich 1b der Speichereinheit ein zusätzlicher Datensatz 13 in der Adresse 0013 des zweiten Speicherbereichs abgespeichert. Der Datensatz 13 gibt zunächst die Anzahl der Zei-geradressen auf Flächendatenelementen in dem ersten Speicherbereich 1a an. Dies sind in diesem Falle vier Flächendatenlemente, entsprechend den vier Flächen 13, 14, 15 und 16. Diese vier Flächen sind unter den Adressen 0013 bis 0016 in dem ersten Speicherbereich 1a der Speichereinheit 1 abgespeichert. Diese vier Adressen sind als Zeiger- bzw. Verweisadressen ebenfalls in dem Datensatz 13 abgespeichert. Anschließend daran ist die Anzahl der Zeigeradressen auf Datensätze im zweiten Speicherbereich 1b angegeben. Diese Anzahl beträgt in dem dargestellten Beispiel für den Datensatz 13 sechs. Dies bedeutet, der Datensatz 13 besitzt sechs Zeigeradressen auf sechs andere Datensätze innerhalb des zweiten Speicherbereichs 1b, wobei diese Datensätze zusammen den gleichen Flächenbereich beschreiben wie der Datensatz 13. In dem in Fig. 4c dargestellten Beispiel besitzt der Datensatz 13 sechs Zeigeradressen 0002, 0003, 0004, 0007, 0008, 0009 auf die Datensätze 2, 3, 4, 7, 8 und 9 im zweiten Speicherbereich 1b. Der Datensatz 13 beschreibt die identische Teiloberfläche für die Datensätze, auf die er verweist, jedoch mit einer verminderten Genauigkeit bzw. mit einer erhöhten Reduktionsstufe. Die Reduktionsstufe des Datensatzes 13 ist um eins gegenüber der Reduktionsstufe der Datensätze, auf die er zeigt, erhöht. Beispielsweise besitzen die Datensätze 2, 3, 4, 7, 8, 9 eine Reduktionsstufe null, wohingegen der Datensatz 13, in dem Zeigeradressen auf diese Datensätze abgespeichert sind, eine Reduktionsstufe von eins aufweist.

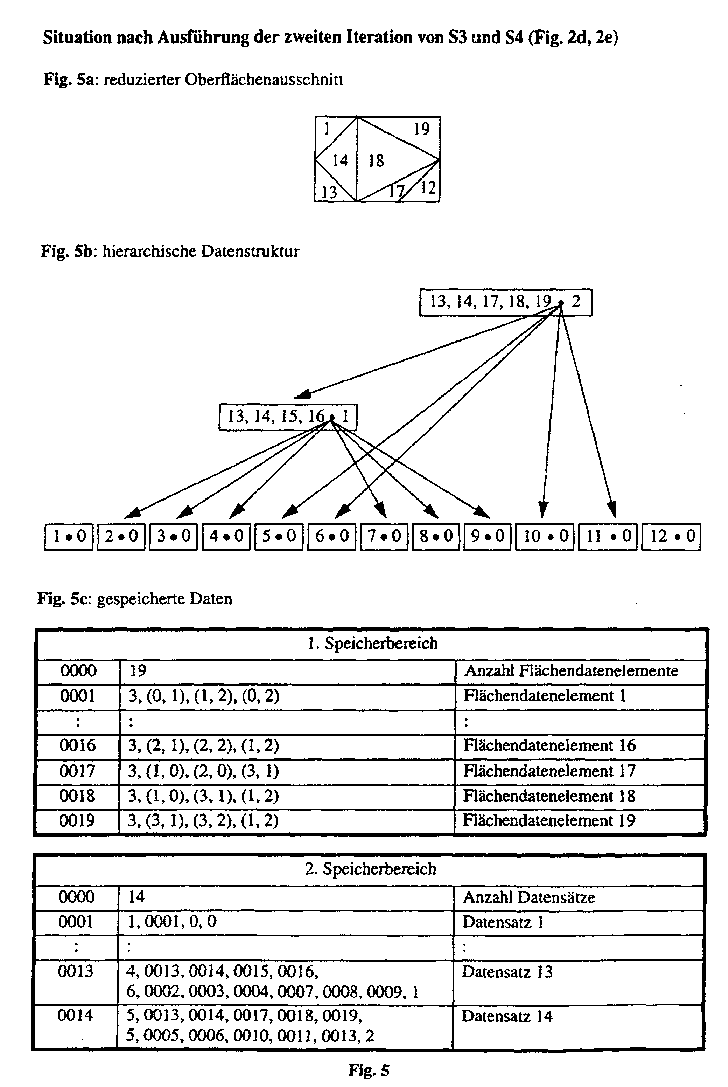

Fig. 5 zeigt die Situation nach der Ausführung einer zweiten Iteration der Schritte 3 und 4 des erfindungsgemäßen Verfahrens im Beispielfall.

Fig. 5a zeigt den in Fig. 4a dargestellten Oberflächenausschnitt nach einem weiteren Reduktionsschritt.

In Fig. 5b ist die entsprechende hierarchische Datenstruktur abgebildet. Durch die Reduktion ist ein weiteres Datenstrukturelement hinzugekommen, welches die Flächen 13, 14, 17, 18, 19 in Fig. 5a umfaßt. Dieses vierzehnte Datenstrukturelement besitzt Zeiger auf das dreizehnte Datenstrukturelement sowie auf die Datenstrukturelemente 5, 6, 10 und 11. Die durch die Flächen 13, 14, 17, 18, 19 beschriebene Teilfläche entspricht also der Summe der durch das dreizehnte Datenstrukturelement plus der durch die Dreiecke 5, 6, 10, 11 zusammengesetzten Fläche, wie sie in Fig. 4a dargestellt sind. Das hinzugekommene vierzehnte Datenstrukturelement, welches dem Datensatz 14 in dem zweiten Speicherbereich entspricht, weist eine Reduktionsstufe zwei auf. Dies bedeutet, daß sich die Genauigkeit der Oberflächenbeschreibung nochmals vermindert hat bzw. daß sich die Genauigkeitsstufe um eins vermindert hat.

Fig. 5c zeigt die in dem ersten und zweiten Speicherbereich abgespeicherten Daten nach der Durchführung der zweiten Iteration der Schritte S3 und S4 bei dem beispielhaften Oberflächenausschnitt. In dem ersten Speicherbereich 1a hat sich die Anzahl der Flächendatenelemente gegenüber dem in Fig. 4c gezeigten Zustand um drei erhöht. Dies entspricht der Anzahl der Dreiecke 17, 18, 19. Diese Dreiecke sind als Flächendatenelemente 17, 18, 19 unter den Adressen 017 bis 019 im ersten Speicherbereich 1a der Speichereinheit 1 abgespeichert.

Die Anzahl der Datensätze im zweiten Speicherbereich 1b der Speichereinheit 1 hat sich ebenfalls erhöht, und zwar um eins. Dies entspricht dem hinzugekommenen Datenstrukturelement mit der Reduktionsstufe zwei. Dieses Datenstrukturelement ist als Datensatz 14 unter der Adresse 0014 in dem zweiten Speicherbereich 1b abgespeichert. Die Anzahl der Zeigeradressen auf Flächendatenelemente in dem ersten Speicherbereich 1a beträgt im hinzugekommenen Datensatz 14 fünf. Diese Adressen sind die Adressen 0013, 0014, 0017, 0018, 0019 im ersten Speicherbereich 1a. Diese Adressen entsprechen den fünf Dreiecken 13, 14, 17, 18, 19, aus welchen sich das vierzehnte Datenstrukturelement zusammensetzt. Die Anzahl p von Zeigeradressen auf Datensätze in dem zweiten Speicherbereich 1b beträgt ebenfalls fünf im Datensatz 14. Dies sind die Adressen 0005, 0006, 0010, 0011, 0013 im zweiten Speicherbereich 1b. Es handelt sich dabei um die Adressen derjenigen Datensätze, auf die der Datensatz zeigt bzw. auf die das Datenstrukturelement zeigt. Die Zeigeradresse 0013 im Datensatz 14 zeigt auf die Adresse 0013, unter welcher der Datensatz 13 abgespeichert ist. Dieser Datensatz 13 verweist wiederum auf sechs Datensätze im zweiten Speicherbereich 1b, u.a. beispielsweise auf den Datensatz 2 unter der Adresse 0002 im zweiten Speicherbereich 1b. Somit verweist der Datensatz 14 indirekt verkettet über Zeigeradressen auf Datensätze mit der niedrigsten Reduktionsstufe 0.

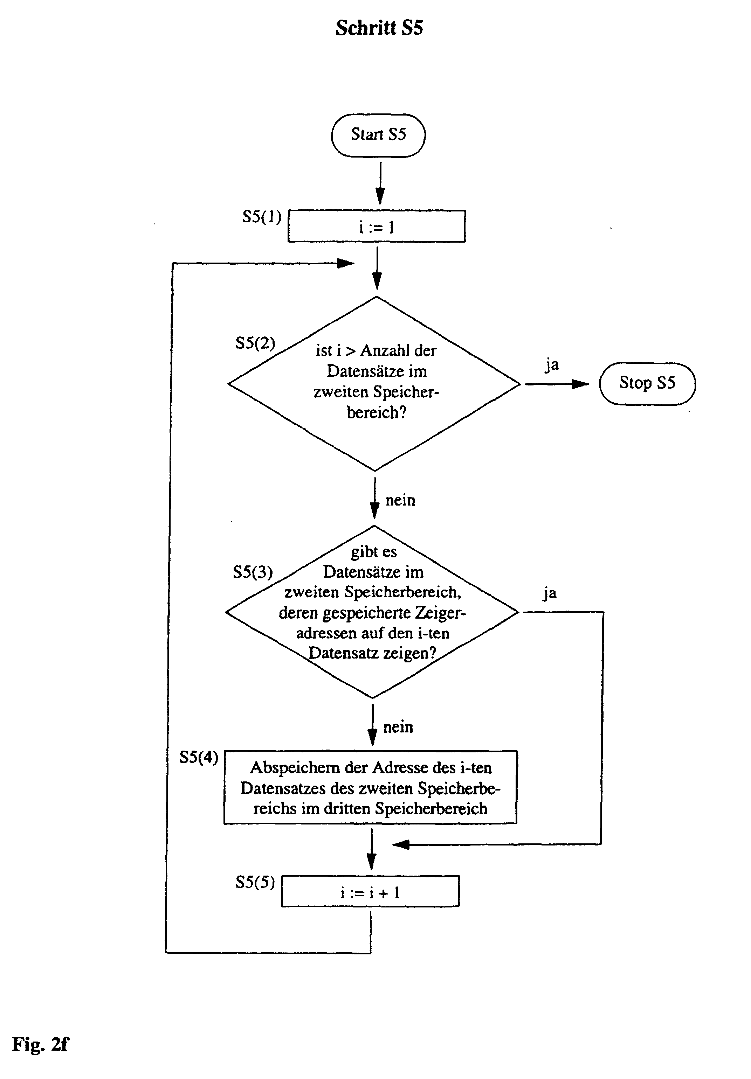

Fig. 2f zeigt den fünften Schritt S5 des erfindungsgemäßen Verfahrens im Detail. In dem fünften Schritt S5 werden die Anfangsdatensätze zur Auswertung der hierarchischen Datenstruktur gesucht. In einem ersten Unterschritt S5(1) wird ein Zähler auf eins gesetzt. In einer Abfrage S5(1) wird geprüft, ob der Zähler größer als die Anzahl der Datensätze im zweiten Speicherbereich 1b ist. Ist der Zähler größer, ist der Schritt S5 beendet. Ist der Zähler kleiner oder gleich der Anzahl der Datensätze im zweiten Speicherbereich 1b, wird in einer zweiten Abfrage S5(3) geprüft, ob es Datensätze im zweiten Speicherbereich 1b gibt, deren gespeicherte Zeigeradressen auf den i-ten Datensatz zeigen. Gibt es keinen solchen Datensatz, wird in einem nächsten Unterschritt S5(4) die Adresse des gefundenen Datensatzes des zweiten Speicherbereichs 1b, auf den keine Zeigeradressen zeigen, in dem dritten Speicherbereich 1c abgespeichert. Lautet das Ergebnis der zweiten Abfrage S5(3) jedoch, daß es einen Datensatz in dem zweiten Speicherbereich 1b gibt, dessen gespeicherte Zeigeradressen auf den untersuchten Datensatz zeigen, wird der Unterschritt S5(4) umgangen, und man gelangt direkt zu dem nächsten Unterschritt S5(5), bei dem der Zähler um eins erhöht wird. Die aus den Unterschritten S5(2), S5(3), S5(4) und S5(5) bestehend Schleife wird für alle Datensätze im zweiten Speicherbereich 1b durchlaufen, d.h. bis der Zähler gleich der Anzahl 0 von gespeicherten Datensätzen im Speicherbereich 1b ist. In dem fünften Schritt S5 des Verfahrens werden also die Adressen von denjenigen Datensätzen in den dritten Speicherbereich 1c kopiert, auf die im hierarchischen Strukturdiagramm kein Zeiger zeigt.

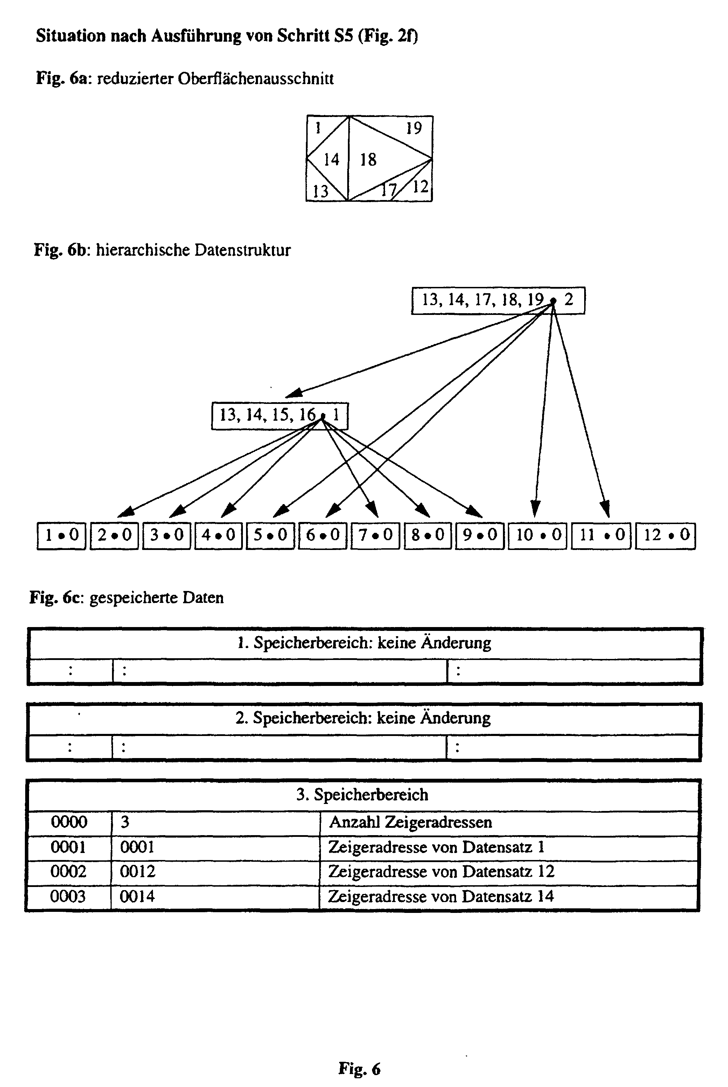

Fig. 6a, b, c zeigen die Situation nach der Ausführung des fünften Schrittes S5 des erfindungsgemäßen Verfahrens. Der Oberflächenausschnitt, welcher in Fig. 6a gezeigt ist, hat sich gegenüber dem Oberflächenausschnitt nach der Durchführung des dritten und vierten Schrittes, wie er in Fig. 5a gezeigt ist, nicht verändert. Dementsprechend ist auch die hierarchische Datenstruktur, wie sie in Fig. 6b dargestellt ist, gegenüber der in Fig. 5b dargestellten Datenstruktur unverändert.
Wie aus Fig. 6c hervorgeht, bleiben die Daten im ersten Speicherbereich 1a sowie im zweiten Speicherbereich 1b der Speichereinheit durch den Schritt S5 unverändert. In den bisher leeren Speicherbereich 1c sind nach Durchführung des fünften Schrittes S5 des erfindungsgemäßen Verfahrens die Zeigeradressen von denjenigen Datensätzen des zweiten Speicherbereichs 1b geschrieben, auf die keine Zeigeradressen im zweiten Speicherbereich 1b zeigen. Dies entspricht gleichzeitig denjenigen Datensätzen im hierarchischen Datenstrukturdiagramm, auf die kein Zeiger zeigt. Wie man beispielsweise aus Fig. 5b unmittelbar erkennt, sind es die Datensätze 1, 12 sowie 14, auf die kein Datensatz zeigt. Diese Datensätze weisen, wie aus Fig. 5c hervorgeht, die Adressen 0001, 0012 und 0014 auf. Diese drei Adressen des zweiten Speicherbereichs 1b sind nach Durchführung des fünften Schrittes S5 des erfindungsgemäßen Verfahrens in den dritten Speicherbereich 1c der Speichereinheit 1 kopiert. In der ersten Speicheradresse 0000 des dritten Speicherbereichs 1c ist die Anzahl der im dritten Speicherbereich abgespeicherten Zeigeradressen auf Datensätze im zweiten Speicherbereich 1b abgespeichert. Im Beispielsfall sind dies drei Adressen.

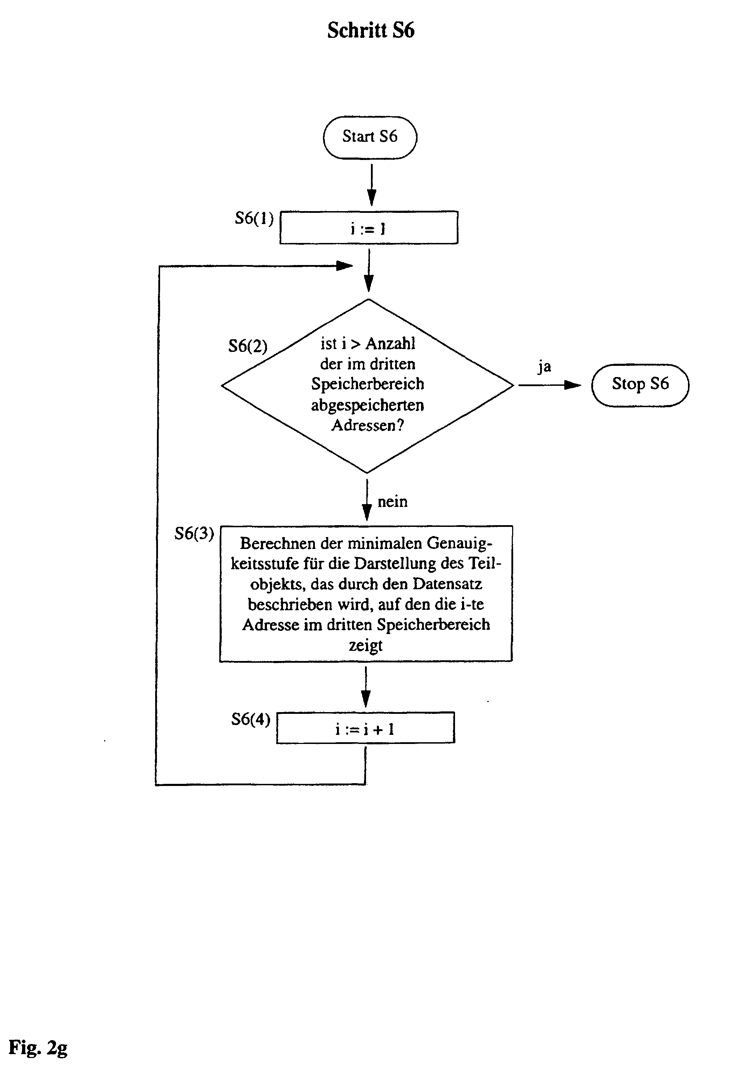

Fig. 2g zeigt den sechsten Schritt S6 des erfindungsgemäßen Verfahrens im Detail. In dem sechsten Schritt S6 wird eine minimale Genauigkeitsstufe für die Darstellung des Objekts in der Berechnungseinheit 2 berechnet. In einem ersten Unterschritt S6(1) wird ein Zähler auf 1 gesetzt. Danach wird in einer Abfrage S6(2) geprüft, ob der Zähler größer als die Anzahl der im dritten Speicherbereich 1c abgespeicherten Adressen ist. Ist der Zähler größer, gelangt man zum Ende von Schritt S6. Ist der Zähler jedoch kleiner oder gleich, wird die minimale Genauigkeitsstufe für die Darstellung des Teilobjektes, das durch den Datensatz beschrieben wird, auf den die i-te Adresse im dritten Speicherbereich 1c zeigt, berechnet. Die Berechnung der minimalen Genauigkeitsstufe erfolgt nach sogenannten LOD-Kriterien, die beliebig vorgebbar sind. Diese LOD-Kriterien können beispielsweise der Abstand zwischen dem Teilobjekt und dem Betrachter sein oder die Lage des Teilobjektes auf einem Ausgabebildschirm. Die meisten LOD-Kriterien sind dynamisch, d.h. sie verändern sich laufend entlang der Objektoberfläche. Die LOD-Kriterien (LOD: level of detail) bestimmen eine Genauigkeitsanforderung an das darzustellende Objekt. Beispielsweise kann ein LOD-Kriterium darin bestehen, daß bei der Visualisierung des Objekts eine maximale Darstellungsgenauigkeit derjenigen Objektteile, welche im Zentrum des Sehfeldes des Betrachters liegen, gefordert wird.
Im sechsten Schritt des erfindungsgemäßen Verfahrens, wie er in Fig. 2f dargestellt ist, wird daher für jeden Datensatz, dessen Adresse im dritten Speicherbereich 1c der Speichereinheit 1 abgespeichert ist, die minimal notwendige Genauigkeitsstufe berechnet.

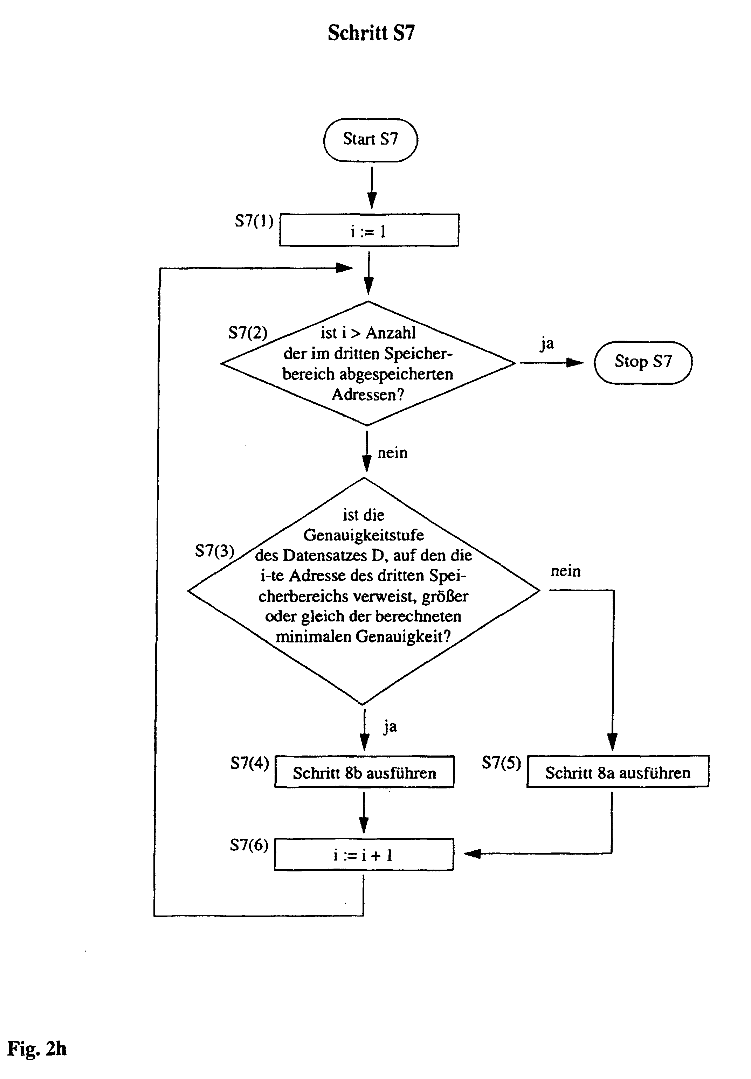

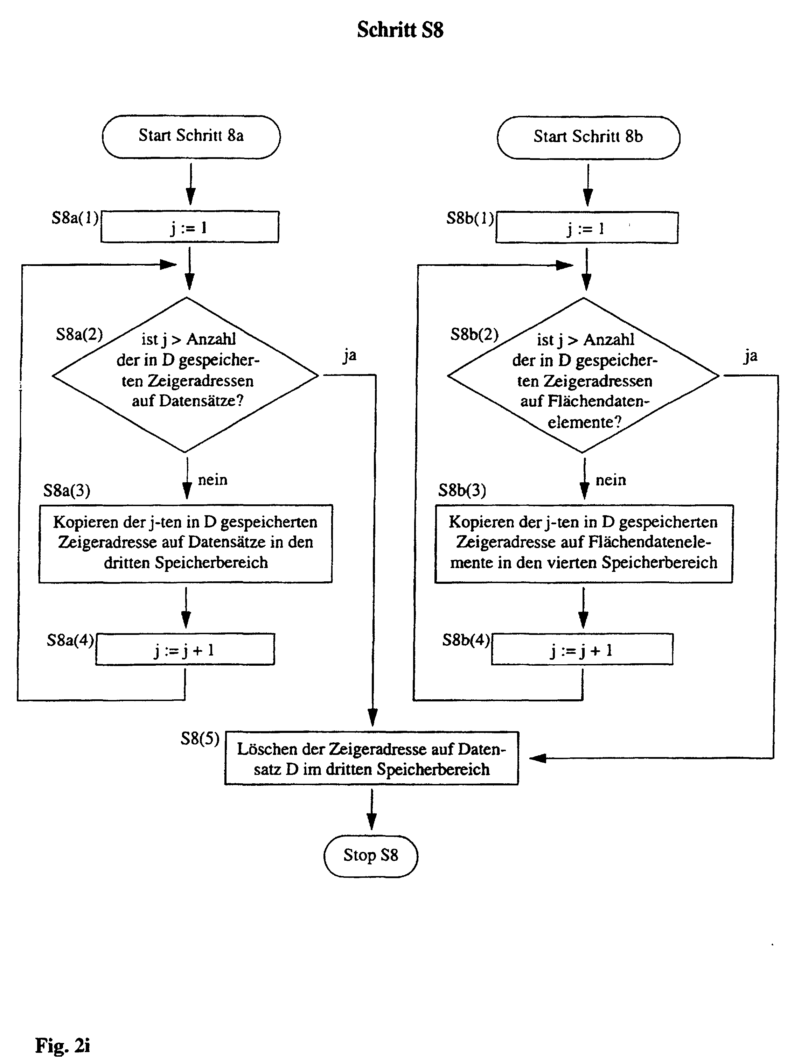

Anschließend an den sechsten Schritt des Verfahrens wird in einem siebten Schritt S7 des erfindungsgemäßen Verfahrens, wie er in Fig. 2h dargestellt ist, die berechnete notwendige minimale Genauigkeitsstufe jedes Datensatzes mit der im Datensatz abgespeicherten Genauigkeitsstufe verglichen. In jedem Datensatz des zweiten Speicherbereichs 1b ist die Reduktionsstufe des Datensatzes abgespeichert. Aus der Reduktionsstufe des Datensatzes läßt sich die Genauigkeitsstufe des Datensatzes berechnen, indem man von einer maximalen Reduktionsstufe die abgespeicherte Reduktionsstufe abzieht. Diese berechnete Genauigkeitsstufe des Datensatzes wird dann mit der erforderlichen minimalen Genauigkeitsstufe, die in Schritt S6 berechnet wurde, verglichen. In dem siebten Schritt des Verfahrens wird in einem ersten Unterschritt S7(1) ein Zähler auf eins gesetzt. In einem zweiten Unterschritt S7(2) wird geprüft, ob der Zähler größer als die Anzahl der im dritten Speicherbereich 1c abgespeicherten Adressen ist. Ist der Zähler größer, gelangt man zum Ende des siebten Schrittes S7. Ist der Zähler kleiner oder gleich der Anzahl der im dritten Speicherbereich 1c abgespeicherten Adressen, wird in einer nächsten Abfrage S7(3) geprüft, ob die Genauigkeitsstufe desjenigen Datensatzes, auf den die i-te Adresse des dritten Speicherbereichs 1c verweist, größer ist als die berechnete minimale Genauigkeitsstufe. Ist die Genauigkeitsstufe des Datensatzes kleiner, gelangt man zu dem Unterschritt S7(4), bei dem der in Fig. 2i dargestellte Schritt 8a ausgeführt wird. Ist die Genauigkeitsstufe des Datensatzes jedoch größer oder gleich bei der Abfrage S7(3), gelangt man zu dem Unterschritt S7(5), bei dem der in Fig. 2i dargestellte Schritt 8b ausgeführt wird. Danach wird in einem nächsten Unterschritt S7(6) der Zähler um eins erhöht und die Schleife S7(2), S7(3), S7(4) oder S7(5) sowie S7(6) solange durchlaufen, bis alle im dritten Speicherbereich 1c abgespeicherten Adressen abgearbeitet sind.

Fig. 2i zeigt die Unterschritte S7(4) sowie S7(5), wie sie in Fig. 2h dargesetllt sind, im Detail.
Im Schritt 8a, der bei Unterschritt S7(5) ausgeführt wird, erfolgt ein Kopiervorgang in den dritten Speicherbereich 1c. Die Zeigeradressen eines Datensatzes, für den im Unterschritt S7(3) bestimmt wurde, daß seine Genauigkeitsstufe kleiner als die für ihn berechnete minimale Genauigkeitsstufe ist, werden dann in den dritten Speicherbereich 1c kopiert. Wie aus Fig. 2i hervorgeht, besteht der Schritt 8a ebenfalls aus Unterschritten. In einem ersten Unterschritt S8a(1) wird ein Zähler j auf eins gesetzt. In einer Abfrage S8a(2) wird geprüft, ob der Zähler j größer als die Anzahl der im Datensatz gespeicherten Zeigeradressen auf Datensätze ist. Ist der Zähler j größer als die Anzahl, gelangt man direkt zu dem Unterschritt S8(5). Ist der Zähler j kleiner oder gleich der Anzahl der im Datensatz gespeicherten Zeigeradressen, wird die j-te im Datensatz D gespeicherte Zeigeradresse auf Datensätze im zweiten Speicherbereich 1b in den dritten Speicherbereich 1c kopiert. Danach wird in einem Unterschritt S8a(4) der Zähler j um eins erhöht. Die Schleife S8a(2), S8a(3), S8a(4) wird solange durchlaufen, bis alle im Datensatz gespeicherten Zeigeradressen in den dritten Speicherbereich 1c kopiert sind.

Wie aus Fig. 2i hervorgeht, weist der Schritt 8b ebenfalls mehrere Unterschritte auf. In einem Unterschritt S8b(1) wird ein Zähler j auf 1 gesetzt. In einer Abfrage S8b(2) wird geprüft, ob der Zähler j größer als die Anzahl der im Datensatz D gespeicherten Zeigeradressen auf Flächendatenelemente ist. Ist der Zähler j größer als die Anzahl, gelangt man direkt zu Unterschritt S8(5). Ist der Zähler j kleiner oder gleich der Anzahl der in D gespeicherten Zeigeradressen auf Flächendatenelemente, gelangt man zu Unterschritt S8b(3). In diesem Unterschritt wird die j-te in D gespeicherte Zeigeradresse auf Flächendatenelemente in den vierten Speicherbereich 1d kopiert. Danach wird in einem Unterschritt S8b(4) der Zähler j um eins erhöht. Die Schleife S8b(2), S8b(3) sowie S8b(4) wird solange durchlaufen, bis alle im Datensatz D gespeicherten Zeigeradressen auf Flächendatenelemente in den vierten Speicherbereich 1d kopiert sind.
Im Unterschritt S8(5) wird schließlich die Zeigeradresse auf den Datensatz D im dritten Speicherbereich 1c gelöscht, und man gelangt nach dem Ende des Schrittes 8 zu dem Unterschritt S7(6) in Fig. 2h.

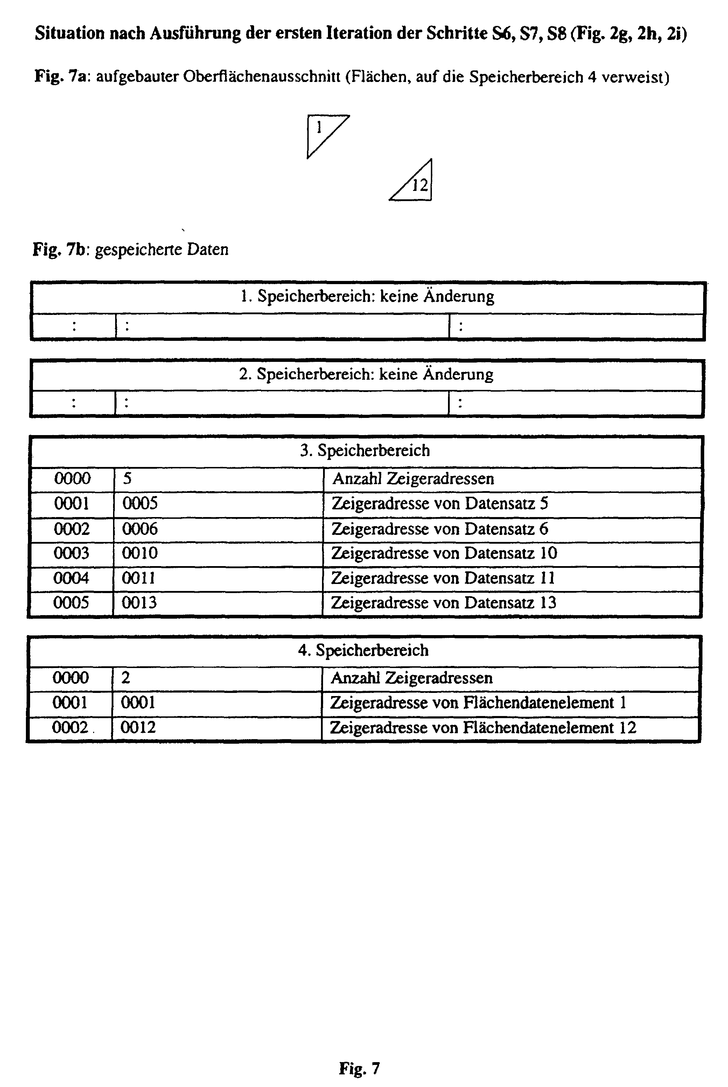

Die Fig. 7a, b zeigt die Situation nach Ausführung einer ersten Iteration die Schritte S6, S7, S8 des erfindungsgemäßen Verfahrens.

Fig. 7a stellt den aufgebauten Oberflächenausschnitt dar, d.h. die Flächen, auf den die im vierten Speicherbereich 4d abgespeicherten Zeigeradressen von Flächendatenelementen im ersten Speicherbereich 1c zeigen.

Fig. 7b bildet die in der Speichereinheit 1 abgespeicherten Daten ab. Die Daten im ersten Speicherbereich 1a sowie im zweiten Speicherbereich 1b werden durch die Ausführung der Schritte S6 bis S8 des Verfahrens nicht verändert, d.h. sie sind im Beispielsfall identisch mit den Daten, so wie sie in Fig. 5c dargestellt sind. Durch die Schritte S6 bis S8 werden die Daten im dritten Speicherbereich 1c und im vierten Speicherbereich 1d verändert. Der in Fig. 7a dargestellte aufgebaute Oberflächenausschnitt entspricht dem Flächendatenelement 1 und dem Flächendatenelement 12, deren Zeigeradresse im vierten Speicherbereich 1d abgespeichert ist, wie in Fig. 7b zu sehen ist.

Bei der in Fig. 7 gezeigten Situation wird angenommen, daß die im Schritt S6 des Verfahrens berechnete notwendige minimale Genauigkeit des Datensatzes 1 und des Datensatzes 12 kleiner als deren tatsächlich abgespeicherte Genauigkeitsstufe ist und daß die berechnete notwendige Genauigkeitsstufe des Datensatzes 14 größer ist als die tatsächlich abgespeicherte Genauigkeitsstufe des Datensatzes 14.

Betrachtet man die Ausgangssituation vor der Durchführung der ersten Iteration der Schritte S6 bis S8 im hierarchischen Datenstrukturdiagramm, wie es in Fig. 6b dargestellt ist, so erkennt man, daß der Datensatz 14 eine Reduktionsstufe 2, der Datensatz 13 eine Reduktionsstufe eins und die Datensätze 1 bis 12 jeweils eine Reduktionsstufe null aufweisen. Die Genauigkeitsstufe der Datensätze ergibt sich dadurch, daß man von einer maximalen Reduktionsstufe die abgespeicherte Reduktionsstufe abzieht. Nimmt man an, daß die maximale Reduktionsstufe beispielsweise 2 ist, so ergibt sich für den Datensatz 14 eine Genauigkeitsstufe von null, für den Datensatz 13 eine Genauigkeitsstufe von eins und für die Datensätze 1 bis 12 eine Genauigkeitsstufe von zwei. Die Datensätze 1 bis 12 geben somit die Oberfläche mit der maximalen Genauigkeit an. In der Ausgangssituation vor der Durchführung der ersten Iteration der Schritte S6 bis S7 sind in dem dritten Speicherbereich 1c im Beispielfall drei Zeigeradressen, nämlich 0001, 0012, 0014 auf die Datensätze 1, 12 und 14 im zweiten Speicherbereich 1b abgespeichert. Diese Datensätze sind beispielsweise in Fig. 5c dargestellt.

Im ersten Schritt S6, dessen Unterschritte in Fig. 2g dargestellt sind, wird für jeden Datensatz, auf den eine Zeigeradresse im dritten Speicherbereich 1c zeigt, dessen notwendige minimale Genauigkeitsstufe berechnet. Im Beispielsfall wird angenommen, daß die berechnete minimale Genauigkeitsstufe für alle drei Datensätze 1, 12, 14 gleich eins ist, d.h. der Berechnungsschritt S6(3) in Fig. 2g ergibt für jeden der Datensätze 1, 12, 14 ein Ergebnis von eins. Für alle drei im dritten Speicherbereich 1c abgespeicherten Datensätze 1, 12, 14 wird im Schritt S7, wie er in Fig. 2h gezeigt ist, geprüft, ob die Genauigkeitsstufe des Datensatzes größer ist als die berechnete minimale Genauigkeitsstufe. Beispielsweise ist die Reduktionsstufe des Datensatzes 1 gleich null, d.h. dessen Genauigkeitsstufe ist bei einer angenommenen maximalen Reduktionsstufe von 2 gleich zwei. Für den Datensatz 1 ergibt also die Abfrage in Schritt S7(3) das Ergebnis, daß der Datensatz eine größere Genauigkeitsstufe besitzt als die minimal erforderliche Genauigkeitsstufe. Daher wird für diesen Datensatz der Schritt S7(4) durchgeführt, und der in Fig. 2h dargestellte Schritt 8b ausgeführt. Die im Datensatz 1 abgespeicherten Zeigeradressen auf Flächendatenelemente im ersten Speicherbereich 1a werden daher im Schritt S8b(3) in den vierten Speicherbereich 1d kopiert. Wie in Fig. 5c beispielsweise zu sehen ist, besitzt der Datensatz 1 lediglich eine Zeigeradresse 0001 auf das Flächendatenelement 1 im Speicherbereich 1a. Diese Zeigeradresse wird in den vierten Speicherbereich 1d kopiert, wie in Fig. 7b zu sehen ist. Der gleiche Vorgang geschieht mit dem Datensatz 12.

Für den Datensatz 14 ergibt die Abfrage im Schritt S7(3), daß die Genauigkeitsstufe des Datensatzes kleiner ist als die berechnete minimale Genauigkeitsstufe. Der Datensatz 14 weist eine Reduktionsstufe von zwei auf, wie beispielsweise in Fig. 6b zu sehen ist. Bei einer angenommenen maximalen Reduktionsstufe von zwei ergibt sich somit eine Genauigkeitsstufe von null, d.h. der Datensatz 14 beschreibt die Oberfläche mit einer geringeren Genauigkeit als beispielsweise der Datensatz 13 oder die Datensätze 1 bis 12. Nimmt man an, daß die berechnete minimale Genauigkeitsstufe für den Datensatz 14, wie sie in Schritt S6(3) berechnet wird, gleich eins ist, so ergibt die Abfrage in Schritt S7(3), daß die Genauigkeitsstufe des Datensatzes 14, nämlich null, kleiner ist als die berechnete notwendige minimale Genauigkeitsstufe von eins. Somit gelangt man für den Datensatz 14 im Unterschritt S7(5) zu Schritt 8a in Fig. 2i. Der Datensatz 14 besitzt fünf Zeigeradressen auf Datensätzen im zweiten Speicherbereich 1b. Diese Zeigeradressen auf Datensätze im zweiten Speicher 1b, nämlich 0005, 0006, 0010, 0011, 0013 werden im Unterschritt S8a(3) in den dritten Speicherbereich 1c kopiert, wie in Fig. 7b dargestellt ist.

Für alle im ersten Iterationsschritt abgearbeiteten Datensätze 1, 12, 14 gelangt man schließlich zu Schritt S8(5), bei dem die Zeigeradressen auf die Datensätze im dritten Speicherbereich 1c gelöscht werden. Wie in Fig. 7b zu sehen ist, sind die Zeigeradressen 0001, 0012, 0014 auf dem Datensatz 1, 12, 14 aus dem dritten Speicherbereich 1c gelöscht. Nach Ausführung des Schrittes S8(5) gelangt man zum Schritt S7(6) in Fig. 2h, bei dem der Zähler i des Schritts S7 um eins erhöht wird.

In einer zweiten Iteration werden wiederum diejenigen Datensätze abgearbeitet, deren Zeigeradresse im dritten Speicherbereich 1c abgespeichert sind. Wie aus Fig. 7b hervorgeht, sind dies im Beispielsfall die Datensätze 5, 6, 10, 11, 13. Die Datensätze 5, 6, 10, 11 weisen eine Genauigkeitsstufe von zwei auf und der Datensatz 13 eine Genauigkeitsstufe eins. Nimmt man an, daß die berechnete notwendige Genauigkeitsstufe für alle Datensätze gleich eins ist, gelangt man für alle Datensätze bei der Abfrage S7(3) zu dem Unterschritt S7(4) und bei keinem der Datensätze zu dem Schritt S7(5). Im Unterschritt S7(4) wird der Schritt 8b ausgeführt, d.h. die im Datensatz abgespeicherten Zeigeradressen auf Flächendatenelemente in dem ersten Speicherbereich 1a werden in den vierten Speicherbereich 1d kopiert. Beispielsweise werden die Zeigeradressen 0013, 0014, 0015, 0016 des Datensatzes 13 auf die Flächendatenelemente 13, 14, 15, 16 im ersten Speicherbereich 1a in den vierten Speicherbereich 1d kopiert. Nach dem Kopiervorgang werden im Schritt S8(5) die Zeigeradressen im dritten Speicherbereich 1c auf die Datensätze 5, 6, 10, 11, 13 gelöscht. Daher ist nach der zweiten Iteration der Schritte S6 bis S8 gemäß dem Beispiel der dritte Speicherbereich 1c leer.

In einem letzten Schritt S9 des erfindungsgemäßen Verfahrens werden die im vierten Speicherbereich 1d der Speichereinheit 1 adressierten Flächendatenelemente an das Ausgabegerät 4 zur geometrischen Darstellung des Objektes ausgegeben.

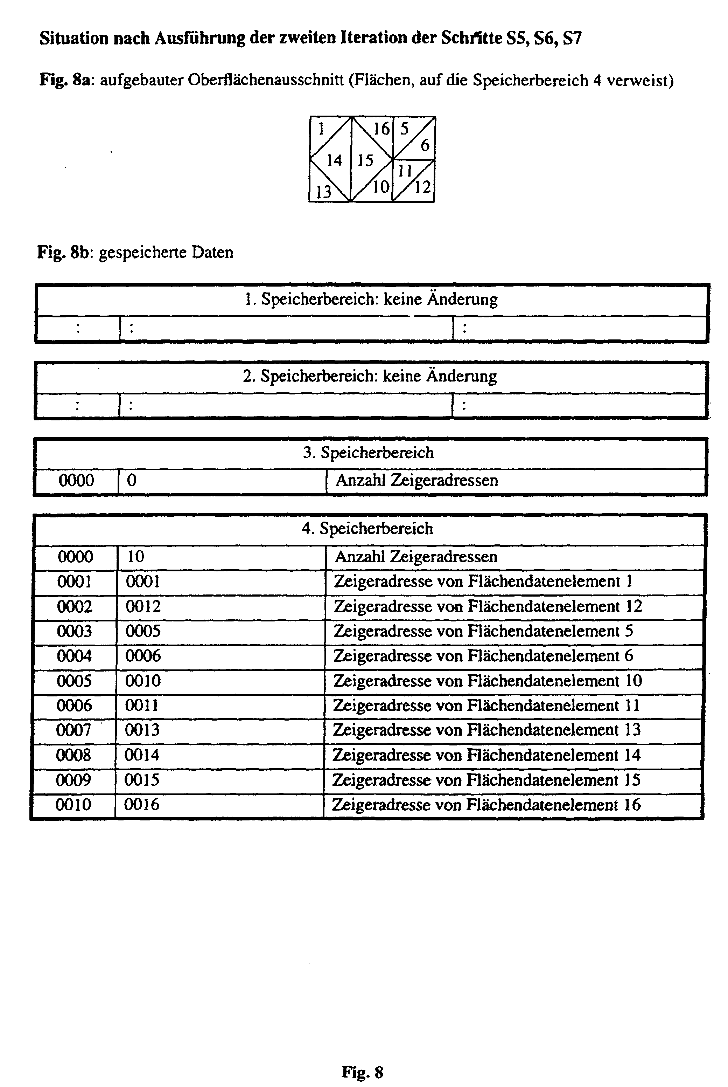

Gemäß Fig. 8a werden die im vierten Speicherbereich 1d abgespeicherten Flächendatenelemente an das Ausgabegerät 4 abgegeben. Dies sind im Beispielsfall das Flächendatenelement 1, 12 sowie die Flächendatenelemente 5, 6, 10, 11, 13, 14, 15, 16.

Vergleicht man die Fig. 3a und 8a miteinander, so erkennt man, daß die ursprünglichen Flächendarstellung mit den Flächen 1 bis 12 ersetzt wurde durch die Flächendarstellung in Fig. 8a mit den Flächen 1, 5, 6, 10, 11, 12, 13, 14, 15. Die Genauigkeit der Flächendarstellung hat sich zwar vermindert, ist jedoch ausreichend im Hinblick auf die berechnete notwendige Genauigkeit. Nach der Ausführung des Verfahrens wird also eine Repräsentation des geometrischen Objekts erzeugt, das die Genauigkeitsanforderungen gemäß der LOD-Kriterien erfüllt.

Das oben beschriebene Verfahren läßt sich in sehr vielen Teilgebieten der Computergraphik vorteilhaft einsetzen. Typische Anwendungsmöglichkeiten sind computer-generierte 3D-Darstellungen, wie beispielsweise Simulation und Visualisierung. Daneben existieren noch mögliche Anwendungsgebiete außerhalb der Computergraphik, beispielsweise Rapid-Prototyping.

Insbesondere im Bereich der Medizin läßt sich das erfindungsgemäße Verfahren wirkungsvoll einsetzen. Das erfindungsgemäße Verfahren läßt sich zuammen mit jeder Art von bildgebenden Verfahren einsetzen, das nicht-invasiv dreidimensionale Abbildungen des Körperinneren einer Person erzeugen können. Die bekanntesten dieser medizinischen Verfahren sind Röntgen-, Computerund Kernspintomographie sowie 3D-Ultraschalltechniken.

Auch in nichtmedizinischen Anwendungsfeldern kommen dreidimensionale Scanning-Verfahren zum Einsatz, die sich mit dem erfindungsgemäßen Verfahren kombinieren lassen. Beispiele hierfür sind die Vermessung und Kontrolle von verschleißkritischen Teilen, z.B. im Flugzeug- und Fahrzeugbau, auf der Basis lasergestützter Scanning-Verfahren oder Flugsimulationen mit geotypischen oder geospezifischen Landschaftsdaten, generiert aus Satellitenaufnahmen.

Das erfindungsgemäße Verfahren erlaubt die Variation der Approximationsgenauigkeit entlang der Oberfläche geometrischer Objekte in Echtzeit. Durch das erfindungsgemäße Verfahren werden durchgeführte Reduktionsschritte für gegebene Objektbereiche soweit rückgängig gemacht, bis eine gewünschte bzw. notwendige Genauigkeit wiederhergestellt ist. Zu diesem Zweck wird während des Reduktionsvorganges eine hierarchische Datenstruktur aufgebaut. In dieser hierarchischen Datenstruktur wird, vereinfacht ausgedrückt, abgespeichert, durch welche Dreiecke mit verschiedener Genauigkeit einzelne Teile des Objekts gebildet werden können. Zur Darstellung bzw. Ausgabe des Objekts kann dann für jedes Teilobjekt der passende Genauigkeitsgrad gewählt werden. Das erfindungsgemäße Verfahren erlaubt eine signifikante Reduktion der Objektkomplexität durchzuführen und gleichzeitig relevante Objektteile mit einer maximalen Genauigkeit darzustellen bzw. auszugeben. Dazu muß die Genauigkeitsabstufung entlang der Oberfläche nicht schon während des Reduktionsvorganges feststehen, sondern kann variabel bei der Darstellung definiert werden. Das erfindungsgemäße Verfahren läßt sich mit verschiedenen Verfahren zur Vereinfachung von geometrischen Oberflächen kombinieren. Bei diesen Verfahren zur Vereinfachung von geometrischen Oberflächen muß es sich allerdings um ein iteratives, lokal arbeitendes Verfahren handeln. Verfahren, die eine komplett neue Oberflächenbeschreibung berechnen, sind nicht geeignet.

## Patentansprüche

1. Verfahren zur Anzeige von geometrischen Objektoberflächen auf einem Ausgabegerät (4) mit variabler Genauigkeit, welches die folgenden Schritte aufweist:
Erzeugen von Oberflächendaten mindestens eines Objekts und Abspeichern der Oberflächendaten in einem ersten Speicherbereich (1a),
Erzeugen von Datensätzen für alle im ersten Speicherbereich (1a) abgespeicherten Oberflächendaten und Abspeichern der Datensätze in einem zweiten Speicherbereich (1b), Erzeugen und Abspeichern in dem ersten Speicherbereich (1a) von zusätzlichen Oberflächendaten zur Darstellung von Teilobjekten mit verminderter Genauigkeit, und paralleles Erzeugen und Abspeichern einer hierarchischen Datenstruktur mit mehreren über Zeigeradressen adressierbaren Datensätzen zur Beschreibung je eines Teils der Objektoberfläche und je einer bestimmten Genauigkeitsstufe in dem zweiten Speicherbereich (1b),
Abspeichern der Zeigeradressen von denjenigen im zweiten Speicherbereich (1b) abgespeicherten Datensätzen, auf die keine in anderen Datensätzen gespeicherte Zeigeradressen zeigen in einem dritten Speicherbereich (1c),
Berechnen einer minimalen Genauigkeitsstufe für die Darstellung eines Teilobjektes in einer Berechnungseinheit (2), Vergleichen der berechneten minimalen Genauigkeitsstufe für jeden Datensatz, dessen Adresse in dem dritten Speicherbereich (1c) abgespeichert ist, mit der im Datensatz abgespeicherten Genauigkeitsstufe,
Auswerten der Vergleichsergebnisse für jeden solchen Datensatz, wobei die Zeigeradressen auf Flächendatenelemente von Datensätzen, deren gespeicherte Genauigkeitsstufe mindestens so groß ist wie die berechnete minimale Genauigkeitsstufe in einen vierten Speicherbereich (1d), und die in den übrigen Datensätzen abgespeicherten Zeigeradressen in den dritten Speicherbereich (1c) kopiert werden, und
Löschen der Zeigeradressen, die auf den Datensatz verweisen, aus dem dritten Speicherbereich (1c), und
Ausgabe der durch die im vierten Speicherbereich (1d) adressierten Flächendatenelemente an ein Ausgabegerät (4) zur geometrischen Darstellung des Objektes.

2. Verfahren zur Anzeige von geometrischen Objektoberflächen auf einem Ausgabegerät (4) mit variabler Genauigkeit, welches die folgenden Schritte aufweist:
Erzeugen von Oberflächendaten mindestens eines Objektes und Abspeichern der Oberflächendaten als Koordinaten von Eckpunkten aneinander anschließender, adressierbarer Flächendatenelemente, welche zusammen die Objektoberfläche bilden in einem ersten Speicherbereich (1a) einer Speichereinheit (1),
Erzeugen für alle im ersten Speicherbereich (1a) abgespeicherten Flächendatenelemente jeweils eines Datensatzes, der eine Zeigeradresse auf das jeweilige Flächendatenelement enthält und eine maximale Genauigkeitsstufe besitzt, und Abspeichern des Datensatzes in einem zweiten Speicherbereich (1b) der Speichereinheit (1),
Erzeugen und Abspeichern in dem ersten Speicherbereich (1a) von zusätzlichen Flächendatenelementen zur Darstellung von Teilobjekten mit verminderter Genauigkeit, wobei sich die Genauigkeitsstufe der Objektoberflächendarstellung vermindert, und paralleles
Erzeugen und Abspeichern einer hierarchischen Datenstruktur mit über Zeigeradressen adressierbaren Datensätzen zur Darstellung je eines Teiles der Objektoberfläche mit einer bestimmten Genauigkeitsstufe in einem zweiten Speicherbereich (1b) der Speichereinheit (1), wobei in jedem Datensatz mindestens eine Zeigeradresse auf Speicherbereiche von Flächendatenelementen zur Beschreibung eines Teilobjektes, Zeigeradressen auf weitere Datensätze mit einer höheren Genauigkeitsstufe, welche zusammen den identischen Teil der Objektoberfläche darstellen, und die eigene Genauigkeitsstufe des Datensatzes abgespeichert werden,
Abspeichern der Zeigeradressen von denjenigen im zweiten n Speicherbereich (1b) abgespeicherten Datensätzen, auf die keine in anderen Datensätzen gespeicherten Zeigeradressen zeigen und die zusammen das ganze Objekt mit der geringsten Genauigkeitsstufe beschreiben, in einem dritten Speicherbereich (1c) der Speichereinheit (1), Berechnen je einer minimalen Genauigkeitsstufe für die Darstellung der Teilobjekte, die durch die Datensätze beschrieben werden, deren Adressen in dem dritten Speicherbereich (1c) abgespeichert sind, in einer Berechnungseinheit (2),
Vergleichen der berechneten minimalen Genauigkeitsstufe für jeden Datensatz, dessen Adresse in dem dritten Speicherbereich (1c) abgespeichert ist, mit der im Datensatz abgespeicherten Genauigkeitsstufe,
Auswerten der Vergleichsergebnisse für jeden Datensatz, dessen Adresse im dritten Speicherbereich (1c) abgespeichert ist, wobei die Zeigeradressen auf Flächendatenelemente von Datensätzen, deren gespeicherte Genauigkeitsstufe mindestens so groß ist wie die berechnete minimale Genauigkeitsstufe, in einen vierten Speicherbereich (1d) der Speichereinheit (1) und die in den übrigen Datensätzen gespeicherten Zeigeradressen in den dritten Speicherbereich (1c) kopiert werden,
Löschen der Zeigeradresse, die auf den Datensatz verweist, aus dem dritten Speicherbereich (1c) der Speichereinheit (1), und
Ausgabe der durch die im vierten Speicherbereich (1d) der Speichereinheit adressierten Flächendatenelemente an ein Ausgabegerät (4) zur geometrischen Darstellung des Objektes.

3. Verfahren nach Anspruch 2,
**dadurch gekennzeichnet,**
**daß** die adressierbaren Flächendatenelemente die Koordinaten von Eckpunkten einer n-eckigen Fläche enthalten.

4. Verfahren nach Anspruch 3,
**dadurch gekennzeichnet,**
**daß** die n-eckigen Flächen Dreiecke mit drei Eckpunkten sind.

5. Verfahren nach einem der vorangehenden Ansprüche,
**dadurch gekennzeichnet,**
**daß** die adressierbaren Flächendatenelemente durch Namen oder Nummern adressierbar sind.

6. Verfahren nach einem der vorangehenden Ansprüche,
**dadurch gekennzeichnet,**
**daß** das Erzeugen der Oberflächendaten durch Datenumwandlung der Ausgabedaten durch eine Objektabtasteinrichtung (7) in einer Datenkonvertierungseinrichtung (6) erfolgt.

7. Verfahren nach einem der vorangehenden Ansprüche 1 bis 5,
**dadurch gekennzeichnet,**
**daß** das Erzeugen der Oberflächendaten durch Konstruieren eines geometrischen Objekts in einer Eingabeeinrichtung (3) erfolgt.

8. Verfahren nach einem der vorangehenden Ansprüche,
**dadurch gekennzeichnet,**
**daß** das Berechnen einer minimalen Genauigkeitsstufe für die Darstellungen des Teilobjekts auf der Basis eingebbarer Kriterien erfolgt.

## Claims

1. Method of displaying geometric object surfaces with a variable level of detail on an output device (4), which comprises the following steps:
generating surface data of at least one object and storing the surface data in a first memory area (1a), generating data records for all surface data stored in said first memory area (1a) and storing the data records in a second memory area (1b),
generating and storing in said first memory area (1a) additional surface data for the representation of object segments with a lower level of detail and generating and
storing a hierarchical data structure in parallel with several data records addressable via pointer addresses for the representation of each part of the object surface, and each a specified level of detail in a second memory area (1b),
storing the pointer addresses of those data records stored in said second memory area (1b) which are not referenced by any pointer addresses stored in other data records, in a third memory area (1c),
computing a minimum level of detail for the representation of an object segment in an arithmetic unit (2), comparing the computed minimum level of detail for each data record whose address is stored in said third memory area (1c), with the level of detail stored in the data record,
evaluating the results of the comparison for each data record, with the pointer addresses referencing surface data elements of data records having a stored level of detail which is at least equal to the computed minimum level of detail being copied into a fourth memory area (1d) and with the pointer addresses stored in the other data records being copied into said third memory area (1c), and erasing the pointer addresses referencing the data record from said third memory area (1c), and
output of the surface data elements addressed in said fourth memory area (1d) to an output device (4) for the geometric display of the object.

2. Method of displaying geometric object surfaces with a variable level of detail on an output device (4), which comprises the following steps:
generating surface data of at least one object and storing the surface data as co-ordinates of vertices of contiguous addressable surface data elements, which constitute altogether the object surface, in a first memory area (1a) of a storage unit (1),
generating one respective data record, which contains a pointer address referencing the respective surface data element and has a maximum level of detail, for all surface data elements stored in said first memory area (1a) and storing the data record in a second memory area (1b) of said storage unit (1),
generating additional surface data elements for the representation of object segments with a lower level of detail and storing same in said first memory area (1a), with the level of detail of the object surface representation being reduced, and in parallel
generating and storing a hierarchical data structure of data records addressable via pointer addresses for the representation of one part of the object surface with a specified level of detail in a second memory area (1b) of said storage unit, with each data record storing at least one pointer address referencing memory areas of surface data elements for specification of an object segment, pointer addresses referencing further data records involving a higher level of detail, which altogether represent the identical part of the object surface, and its own level of detail,
storing the pointer addresses of those data records stored in said second memory area (1b) which are not referenced by any pointer addresses stored in other data records and which altogether specify the object in its entirety with the lowest level of detail, in a third memory area (1c) of said storage unit (1),
computing each a minimum level of detail for the representation of the object segment specified by the data records whose addresses are stored in said third memory area (1c), in an arithmetic unit (2),
comparing the computed minimum level of detail for each data record whose address is stored in said third memory area (1c), with the level of detail stored in the data record,
evaluating the results of the comparison for each data record whose address is stored in said third memory area (1c), with the pointer addresses referencing surface data elements of data records having a stored level of detail which is at least equal to the computed minimum level of detail being copied into a fourth memory area (1d) of said storage unit (1) and with the pointer addresses stored in the other data records being copied into said third memory area (1c),
erasing the pointer address referencing the data record from said third memory area (1c) of said storage unit, and
output of the surface data elements addressed in said fourth memory area (1d) of said storage unit to an output device (4) for the geometric display of the object.

3. Method according to claim 2,
**characterised in**
**that** said addressable surface data elements contain the coordinates of vertices of a polygon surface.

4. Method according to claim 3,
**characterised in**
**that** said polygons are triangles with three vertices.

5. Method according to one of the preceeding claims,
**characterised in**
**that** said addressable surface data elements are addressable by names or numbers.

6. Method according to one of the preceeding claims,
**characterised in**
**that** the generation of the surface data is implemented by data conversion of the output data by means of an object scanning unit (7) in a data conversion module (6).

7. Method according to one of the preceeding claims,
**characterised in**
**that** the generation of the surface data is implemented by designing a geometric object in an input device (3).

8. Method according to one of the preceeding claims **characterised in**
**that** a minimum level of detail is computed for the representations of the object segment on the basis of criteria which may be entered.

## Revendications

1. Procédé d'affichage de surfaces géométriques sur un appareil de sortie (4) à précision variable qui comporte les étapes suivantes :
- création de données de surface d'au moins un objet et mémorisation des données de surface dans une première zone de mémoire (1a),
- création d'enregistrements pour toutes les données de surface mémorisées dans la première zone de mémoire (1a) et mémorisation des enregistrements dans une deuxième zone de mémoire (1b),
- création et mémorisation, dans la première zone de mémoire (la), de données de surface supplémentaires pour la représentation d'objets partiels avec une précision réduite ainsi que création et mémorisation parallèles d'une structure de données hiérarchique avec plusieurs enregistrements adressables par le biais d'adresses pour la description d'une partie de la surface et d'un degré de précision particulier dans la deuxième zone de mémoire (1b),
- mémorisation, dans une troisième zone de mémoire (1c), des adresses des enregistrements mémorisés dans la deuxième zone de mémoire (1b) indiqués par aucune adresse stockée dans d'autres enregistrements,
- calcul d'un degré de précision minimal pour la représentation d'un objet partiel dans une unité de calcul (2),
- comparaison du degré de précision minimal calculé pour chaque enregistrement, dont l'adresse est mémorisée dans la troisième zone de mémoire (1c), avec le degré de précision mémorisé dans l'enregistrement,
- évaluation des résultats de comparaison pour chacun de ces enregistrements, les adresses, indiquant des éléments de données de surface d'enregistrements dont le degré de précision stocké est au moins aussi élevé que le degré de précision minimal calculé, étant copiées dans une quatrième zone de mémoire (1d) et les adresses mémorisées dans les enregistrements restants étant copiées dans la troisième zone de mémoire (1c) et
- effacement, de la troisième zone de mémoire (1c), des adresses qui renvoient à l'enregistrement et
- émission des éléments de données de surface adressés dans la quatrième zone de mémoire (1d) vers un appareil de sortie (4) pour la représentation géométrique de l'objet.

2. Procédé d'affichage de surfaces géométriques sur un appareil de sortie (4) à précision variable qui comporte les étapes suivantes :
- création de données de surface d'au moins un objet et mémorisation des données de surface, dans la première zone de mémoire (1a) d'une unité de mémoire (1), en tant que coordonnées d'angles d'éléments de données de surface, adressables et se rattachant les uns aux autres, qui forment conjointement la surface,
- création, pour tous les éléments de données de surface mémorisés dans la première zone de mémoire (1a), d'un enregistrement qui comprend une adresse indiquant l'élément de données de surface respectif et possède un degré de précision maximal, et
- mémorisation de l'enregistrement dans une deuxième zone de mémoire (1b) de l'unité de mémoire (1),
- création et mémorisation, dans la première zone de mémoire (1a), d'éléments de données de surface supplémentaires pour la représentation d'objets partiels avec une précision réduite, le degré de précision de la représentation de surfaces diminuant, et
- création et mémorisation parallèles d'une structure de données hiérarchique avec des enregistrements adressables par le biais d'adresses pour la représentation d'une partie de la surface avec un degré de précision particulier dans une deuxième zone de mémoire (1b) de l'unité de mémoire (1), dans chaque enregistrement sont mémorisées au moins une adresse indiquant des zones de mémoire d'éléments de données de surface pour la description d'un objet partiel, des adresses indiquant d'autres enregistrements avec un degré de précision plus élevé, qui représentent conjointement la partie identique de la surface, et le degré de précision propre,
- mémorisation, dans une troisième zone de mémoire (1c) de l'unité de mémoire (1), des adresses des enregistrements mémorisés dans la deuxième zone de mémoire (1b) qu'aucune adresse stockée dans d'autres enregistrements n'indique et qui décrivent conjointement l'objet entier avec le degré de précision le plus faible,
- calcul, dans une unité de calcul (2), d'un degré de précision minimal pour la représentation des objets partiels qui sont décrits par les enregistrements dont les adresses sont mémorisées dans la troisième zone de mémoire (1c),
- comparaison du degré de précision minimal calculé pour chaque enregistrement, dont l'adresse est mémorisée dans la troisième zone de mémoire (1c), avec le degré de précision mémorisé dans l'enregistrement,
- évaluation des résultats de comparaison pour chaque enregistrement dont l'adresse est copiée dans la troisième zone de mémoire (1c), les adresses, indiquant des éléments de données de surface d'enregistrements dont le degré de précision stocké est au moins aussi élevé que le degré de précision minimal calculé, étant copiées dans une quatrième zone de mémoire (1d) de l'unité de mémoire (1) et les adresses mémorisées dans les enregistrements restants étant copiées dans la troisième zone de mémoire (1c),
- effacement, de la troisième zone de mémoire (1c) de l'unité de mémoire (1), de l'adresse qui renvoie à l'enregistrement, et
- émission des éléments de données de surface, adressés dans la quatrième zone de mémoire (1d) de l'unité de mémoire, vers un appareil de sortie (4) pour la représentation géométrique de l'objet.

3. Procédé selon la revendication 2, **caractérisé en ce que** les éléments de données de surface adressables contiennent les coordonnées des angles d'une surface à n angles.

4. Procédé selon la revendication 3, **caractérisé en ce que** les surfaces à n angles sont des triangles à trois angles.

5. Procédé selon l'une des revendications précédentes, **caractérisé en ce que** les éléments de données de surface adressables peuvent être adressés par des noms ou des numéros.

6. Procédé selon l'une des revendications précédentes, **caractérisé en ce que** la création des données de surface se fait par la transformation des données de sortie par un dispositif d'analyse d'objets (7) dans un dispositif de conversion des données (6).

7. Procédé selon l'une des revendications précédentes de 1 à 5, **caractérisé en ce que** la création des données de surface se fait par la construction d'un objet géométrique dans un dispositif d'entrée (3).

8. Procédé selon l'une des revendications précédentes, **caractérisé en ce que** le calcul d'un degré de précision minimal, pour les représentations de l'objet partiel, se fait sur la base de critères saisissables.
